# EUROPEAN PATENT SPECIFICATION

(11) **EP 3 912 812 B1**
(45) Date of publication and mention of the grant of the patent: **27.08.2025**
(21) Application number: 20741054.9
(22) Date of filing: 14.01.2020
(51) Int. Cl.: B32B 27/30, B32B 27/36, G02B 5/22, B29C 48/07, B29C 48/18

(54) **EXTRUDED RESIN LAYERED BODY AND CURED COAT-ATTACHED EXTRUDED RESIN LAYERED BODY**
SCHICHTKÖRPER AUS EXTRUDIERTEM HARZ UND MIT GEHÄRTETER SCHICHT VERBUNDENER EXTRUDIERTER HARZSCHICHTKÖRPER
CORPS STRATIFIÉ DE RÉSINE EXTRUDÉE ET CORPS STRATIFIÉ DE RÉSINE EXTRUDÉE FIXÉ À UN REVÊTEMENT DURCI

(30) Priority: 18.01.2019 JP 2019006935
(43) Date of publication of application: 24.11.2021
(73) Proprietor: Kuraray Co., Ltd., Kurashiki-shi, Okayama 710-0801 (JP)
(72) Inventor: FUNAZAKI, Kazuo, Tainai-shi, Niigata 959-2691 (JP); OZAWA, Yushi, Tainai-shi, Niigata 959-2691 (JP); TAGA, Sho, Tainai-shi, Niigata 959-2691 (JP)
(74) Representative: Müller-Boré & Partner Patentanwälte PartG mbB
(86) International application number: PCT/JP2020/000858
(87) International publication number: WO 2020/149254

(56) References cited:
- EP-A1- 3 659 802
- WO-A1-2016/002750
- WO-A1-2017/030147
- WO-A1-2018/199213
- WO-A1-2018/199213
- WO-A1-2018/221530
- WO-A1-2018/221580
- WO-A1-2020/138175
- JP-A- 2010 234 640
- JP-A- 2013 022 822
- JP-A- 2014 043 000

## Description

### Technical Field

The present invention relates to an extruded resin laminate and an extruded resin laminate with a cured coating film.

### Background Art

Flat panel displays such as liquid crystal displays and touch panel displays that combine such flat panel displays with touch panels (also referred to as touch screens) are used in ATMs of financial institutions such as banks; vending machines; and digital information devices such as mobile phones (including smartphones), personal digital assistants (PDAs), e.g., tablet-type personal computers, digital audio players, portable game machines, copiers, fax machines, and car navigation systems.

Transparent protection plates are provided on the surfaces of flat panel displays such as liquid crystal displays, touch panels and the like to prevent scratches. In the present description, the protection plates for flat panel displays such as liquid crystal displays, touch panels may be simply abbreviated as "display protection plates" or "protection plates". Conventionally, tempered glass has been mainly used for protection plates, but transparent resin plates are under development in view of workability and weight reduction. The protection plates are required to have functions such as scratch resistance and impact resistance.

For the glazing used in transport machinery such as automobiles, window members of buildings, replacement of materials from glass with transparent resin plates has been progressed for the purpose of reducing the weight of members and improving the safety. In the present description, the glazing composed of transparent resin plates may be referred to also as "resin glazing". In recent years, decorative films made of transparent resins have been developed as alternative materials for coating materials in transport machinery such as automobiles and the like. Resin glazing and decorative films as alternative materials for coating are required to have scratch resistance, impact resistance, weather resistance, workability.

### Citation List

### Patent Literature

Patent Literature 1: Japanese Unexamined Patent Application Publication No. 2007-185956
Patent Literature 2: International Patent Publication No. WO 2011/145630
Patent Literature 3: Japanese Unexamined Patent Application Publication No. 2009-248416
Patent Literature 4: Japanese Patent No. 5617162

WO2018199213 relates to extruded resin plate applications.

### Summary of Invention

### Technical Problem

In the aforementioned applications, a resin laminate comprising a polycarbonate layer that is excellent in heat resistance and impact resistance and a (meth)acrylic resin layer that is excellent in gloss, transparency, and scratch resistance has been contemplated. This resin laminate is preferably produced by coextrusion. In this case, strain stress may remain in the resin laminate to be obtained due to the difference in properties between the two types of resins. The strain stress that remains in the resin laminate is called "residual stress", and warpage may possibly occur in a resin laminate having such a residual stress due to thermal changes.

As a method for reducing residual stress in a resin laminate and reducing warpage, Patent Literature 1 discloses a method of optimizing the rotational speed of cooling rolls used for extrusion molding (Claim 1). Patent Literature 2 discloses a method using, as a (meth)acrylic resin to be laminated with a polycarbonate, a resin obtained by copolymerizing a methacrylic acid ester such as methyl methacrylate (MMA) with an aromatic vinyl monomer such as styrene and hydrogenating an aromatic double bond (Claim 2).

Further, in order to solve the aforementioned problems, studies to improve the heat resistance and the moisture resistance of (meth)acrylic resins have been made. For example, Patent Literature 3 discloses a method using, as a (meth)acrylic resin to be laminated with a polycarbonate, a methacrylic resin having a methyl methacrylate (MMA) units and a unit selected from a methacrylic acid (MA) unit, an acrylic acid (AA) unit, a maleic acid anhydride unit, an N-substituted or unsubstituted maleimide unit, a glutaric acid anhydride structural unit, and a glutarimide structural unit and having a glass transition temperature (Tg) of 110°C or more (Claim 1). However, the range of the glass transition temperature (Tg) of this methacrylic resin includes a temperature of less than 120°C. Therefore, the Tg is low and the heat resistance is insufficient so that the warpage of the resin laminate may not be effectively reduced. Further, the methacrylic resin having a ring structure in the main chain used in Patent Literature 3 easily absorbs ultraviolet light, and it is difficult to obtain good weather resistance even if an ultraviolet absorber is added thereto.

In recent years, a display subjected to shape processing such as curved surface processing has been proposed for flat panel displays such as liquid crystal displays in view of the design properties. Resin glazing used for transport machinery such as automobiles, window members of buildings, may be subjected to shape processing such as curved surface processing. The decorative films used for transport machinery suchas automobiles as alternative materials for coating are generally subjected to shape processing such as curved surface processing. The shape processing such as curved surface processing is performed by thermoforming such as press molding, vacuum forming, and pressure forming.

Regarding the curved surface processing of resin laminates, Patent Literature 4 is mentioned as a related art of the present invention. Patent Literature 4 discloses a multilayer film comprising a methacrylic resin layer preferably containing acrylic rubber particles laminated on one side of a polycarbonate resin layer as a configuration to reduce the stress during thermoforming to reduce cracks and the like, wherein the glass transition temperature (Tg) of the polycarbonate is 130°C or less, and the difference in glass transition temperature (Tg) between the polycarbonate and the methacrylic resin is less than 25°C (Claim 1).

Since the multilayer film according to Patent Literature 4 has a small difference in glass transition temperature (Tg) between the polycarbonate and the methacrylic resin, the workability during thermoforming is good. However, the glass transition temperature (Tg) of the polycarbonate is set low in order to decrease the difference in glass transition temperature (Tg) from the methacrylic resin, which is not preferable in view of the heat resistance. Further, polycarbonates generally tend to be poor in weather resistance, but Patent Literature 4 fails to disclose means for improving the weather resistance. Accordingly, the multilayer film according to Patent Literature 4 may not have a performance suitable as a protection plate for curved displays, resin glazing used for transport machinery such as automobiles, window members of buildings, and a decorative film serving as an alternative material for coating.

The present invention has been devised in view of the circumstances described above, and an object thereof is to provide an extruded resin laminate comprising a polycarbonate-containing layer that is excellent in heat resistance and impact resistance and a (meth)acrylic resin-containing layer that is excellent in gloss, transparency, and scratch resistance, in which the heat resistance of the (meth)acrylic resin-containing layer is improved, warpage is reduced even under exposure to a high-temperature and high-humidity environment, and the thermoforming workability is excellent.

It is another object of the present invention to provide an extruded resin laminate comprising a polycarbonate-containing layer that is excellent in heat resistance and impact resistance and a (meth)acrylic resin-containing layer that is excellent in gloss, transparency, and scratch resistance, in which the heat resistance of the (meth)acrylic resin-containing layer is improved, warpage is reduced even under exposure to a high-temperature and high-humidity environment, the thermoforming workability is excellent, and preferably the weather resistance is also excellent.

### Solution to Problem

The present invention provides the extruded resin laminate and the extruded resin laminate with cured coating film according to [1] to [13] below.
[1] An extruded resin laminate comprising: a (meth)acrylic resin-containing layer containing a (meth)acrylic resin (A) with a triad syndiotacticity (rr) of 63% or more, the (meth)acrylic resin-containing layer being laminated on at least one side of a polycarbonate-containing layer,wherein the (meth)acrylate resin (A) has a content of methyl methacrylate units of 90 mass% or more.
[2] The extruded resin laminate according to [1], wherein a difference in glass transition temperature between the polycarbonate contained in the polycarbonate-containing layer and the (meth)acrylic resin (A) is 28°C or less.
[3] The extruded resin laminate according to [1] or [2], wherein the (meth)acrylic resin (A) has a glass transition temperature of 122°C or more.
[4] The extruded resin laminate according to any one of [1] to [3], wherein the (meth)acrylic resin (A) has a content of methyl methacrylate units of 99 mass% or more.
[5] The extruded resin laminate according to any one of [1] to [4], wherein the (meth)acrylic resin-containing layer comprises an ultraviolet absorber.
[6] The extruded resin laminate according to any one of [1] to [5], wherein
   a C_{UV} is 3 mass% or less, and
   a value of ta (µm) × Cuv (mass%) is 0.20 or more
   wherein ta (µm) represents a thickness of the (meth)acrylic resin-containing layer, and Cuv (mass%) represents a content of the ultraviolet absorber in the (meth)acrylic resin-containing layer.
[7] The extruded resin laminate according to any one of 1 to 6, wherein the (meth)acrylic resin-containing layer comprises rubber particles having a multilayered structure, and wherein the rubber particles having a multilayered structure are acrylic rubber particles having a multilayered structure comprising one or more graft copolymer layers containing one or more acrylic acid alkyl ester copolymers.
[8] The extruded resin laminate according to [7], wherein a content of the rubber particles having a multilayered structure in the (meth)acrylic resin-containing layer is 6 to 25 mass%.
[9] The extruded resin laminate according to any one of [1] to [8] to be used for a display protection plate, the extruded resin laminate having a total thickness of 0.5 to 3.0 mm and the (meth)acrylic resin-containing layer having a thickness of 0.04 mm or more.
[10] The extruded resin laminate according to [9], having a retardation in a range of 50 to 210 nm.
[11] The extruded resin laminate according to any one of [1] to [8] to be used for construction, the extruded resin laminate having a total thickness of 3.0 to 12.0 mm and the (meth)acrylic resin-containing layer having a thickness of 0.04 mm or more.
[12] The extruded resin laminate according to any one of [1] to [8] to be used for a decorative film, the extruded resin laminate having a total thickness of 0.1 to 0.5 mm and the (meth)acrylic resin-containing layer having a thickness of 0.04 mm or more, wherein a proportion of the thickness of the (meth)acrylic resin-containing layer with respect to the total thickness is 50% or less.
[13] An extruded resin laminate with cured coating film, comprising:
   the extruded resin laminate according to any one of [1] to [12]; and
   a cured coating film, wherein the cured coating film is a scratch resistance cured coating film or a low reflective cured coating film.

### Advantageous Effects of Invention

The present invention can provide an extruded resin laminate comprising a polycarbonate-containing layer that is excellent in heat resistance and impact resistance and a (meth)acrylic resin-containing layer that is excellent in gloss, transparency, and scratch resistance, in which the heat resistance of the (meth)acrylic resin-containing layer is improved, warpage is reduced even under exposure to a high-temperature and high-humidity environment, and the thermoforming workability is excellent.

The present invention can also provide an extruded resin laminate comprising a polycarbonate-containing layer that is excellent in heat resistance and impact resistance and a (meth)acrylic resin-containing layer that is excellent in gloss, transparency, and scratch resistance, in which the heat resistance of the (meth)acrylic resin-containing layer is improved, warpage is reduced even under exposure to a high-temperature and high-humidity environment, the thermoforming workability is excellent, and preferably the weather resistance is also excellent.

### Brief Description of the Drawings

[Fig. 1] Fig. 1 is a schematic cross-sectional view of the extruded resin laminate of the first embodiment according to the present invention.
[Fig. 2] Fig. 2 is a schematic cross-sectional view of the extruded resin laminate of the second embodiment according to the present invention.
[Fig. 3] Fig. 3 is a schematic view of the apparatus for production of the extruded resin laminate of one embodiment according to the present invention.
[Fig. 4] Fig. 4 is a schematic view of the falling ball test of the extruded resin laminate for resin glazing according to the present invention.

### Description of Embodiments

### [Extruded resin laminate]

The present invention relates to an extruded resin laminate such as an extruded resin plate, an extruded resin film. The extruded resin plate that is the first embodiment of the extruded resin laminate of the present invention is, for example, suitable as a protection plate for flat panel displays such as liquid crystal displays, touch panels, and resin glazing used for transport machinery such as automobiles, window members of buildings. The extruded resin film that is the second embodiment of the extruded resin laminate of the present invention is, for example, suitable as a decorative film serving as an alternative material for coating used for transport machinery such as automobiles.

In general, the term "film", "sheet", or "plate" is used for a thin film formed product depending on its thickness, but there is no clear distinction. In the present description, the term "film" is used for a thin film formed product of 0.5 mm or less, and the term "plate" is used for a thin film formed product of 0.5 mm or more, for convenience of description.

The extruded resin laminate of the present invention has a layer containing a (meth)acrylic resin (A) ((meth)acrylic resin-containing layer) with a triad syndiotacticity (rr) of 63% or more laminated on at least one side of a layer containing a polycarbonate (PC) (polycarbonate-containing layer). In the present description, the term "(meth)acrylic" collectively refers to acrylic and methacrylic.

The polycarbonate (PC) is excellent in heat resistance and impact resistance, and the (meth)acrylic resin (A) is excellent in gloss, transparency, and scratch resistance. Accordingly, the extruded resin laminate of the present invention laminating these resins is excellent in gloss, transparency, heat resistance, impact resistance, and scratch resistance. Further, the extruded resin laminate of the present invention has excellent productivity since it is produced by extrusion molding.

### ((Meth)acrylic resin-containing layer)

### <(Meth)acrylic resin (A)>

The (meth)acrylic resin-containing layer is composed of an acrylic resin composition containing the (meth)acrylic resin (A) with a triad syndiotacticity (rr) (which may be hereinafter referred to simply as "syndiotacticity (rr)" or abbreviated as "rr percentage") of 63% or more.

The (meth)acrylic resin (A) with a rr percentage of 63% or more may be one (meth)acrylic resin with a rr percentage of 63% or more alone or a mixture of a plurality of (meth)acrylic resins that is composed of the plurality of (meth)acrylic resins with different rr percentages and has a rr percentage of 63% or more as a whole.

In the case where the (meth)acrylic resin (A) is a mixture of a plurality of (meth)acrylic resins, the mixture may have suitable properties as the (meth)acrylic resin (A) as a whole, also for various properties other than the rr percentage (such as Tg, Mw, Mw/Mn, MFR, and flexural modulus).

The (meth)acrylic resin (A) with a rr percentage of 63% or more has a glass transition temperature (Tg) and a heat resistance that are higher than those of general (meth)acrylic resins. In the present description, the glass transition temperature of the (meth)acrylic resin (A) will be referred to as Tg (A), and the glass transition temperature of the polycarbonate (PC) will be referred to as Tg (PC). In the present description, the glass transition temperature is determined by the method described in [Examples], unless otherwise noted.

For improving the Tg (A), the rr percentage of the (meth)acrylic resin (A) is 63% or more, preferably 65% or more. The upper limit of the rr percentage of the (meth)acrylic resin (A) is not particularly limited and is preferably 99%, more preferably 95%, particularly preferably 90%, most preferably 85%, in view of the forming processability and the surface hardness.

The Tg (A) is preferably 122°C or more, more preferably 125°C or more, particularly preferably 127°C or more. The upper limit of the Tg (A) is generally 130°C. The Tg (A) can be controlled by adjusting the molecular weight, the rr percentage.

While general (meth)acrylic resins have a comparatively low glass transition temperature (Tg) and a comparatively large difference in glass transition temperature (Tg) from the polycarbonate (PC), the (meth)acrylic resin (A) with a rr percentage of 63% or more has a comparatively high glass transition temperature (Tg) and a comparatively small difference in glass transition temperature (Tg) from the polycarbonate. Therefore, the extruded resin laminate of the present invention is not easily affected by the external environmental temperature, so that warpage is reduced even under exposure to a high-temperature and high-humidity environment. Further, the extruded resin laminate can be easily thermoformed, and the surface properties of a secondary formed product obtained after the thermoforming can be improved. Further, in the case of forming a cured coating film on the extruded resin laminate of the present invention, curing can be performed at a higher temperature. Therefore, the surface hardness of the cured coating film can be enhanced, and the adhesion of the extruded resin laminate can be enhanced.

The difference between the glass transition temperature of the polycarbonate (PC) (Tg (PC)) and the glass transition temperature of the (meth)acrylic resin (A) (Tg (A)) is preferably 28°C or less, more preferably 26°C or less.

The triad syndiotacticity (rr) is a proportion at which two chains (diad) in the chains of three consecutive structural units (triad) are both racemos (referred to as rr). In the chains of structural units (diad) in polymer molecules, those having the same configuration are called meso, and those having the opposite configuration are called racemo, which are referred to as m and r, respectively. In the present description, the triad syndiotacticity (rr) is a value calculated according to formula: (X/Y) × 100 by determining a ¹H-NMR spectrum in deuterated chloroform at 30°C and measuring, from the spectrum, an area (X) of the region of 0.6 to 0.95 ppm and an area (Y) of the region of 0.6 to 1.35 ppm when TMS is taken as 0 ppm, unless otherwise noted.

The weight-average molecular weight (Mw) of the (meth)acrylic resin (A) is not particularly limited and is preferably 30000 to 200000, more preferably 50000 to 150000, particularly preferably 60000 to 120000. In the case where the Mw of the (meth)acrylic resin (A) with a rr percentage of 56% or more is 30000 to 200000, the (meth)acrylic resin-containing layer is easily formed, and the extruded resin laminate to be obtained has high strength and is less likely to crack.

The molecular weight distribution of the (meth)acrylic resin (A) (a ratio of the weight-average molecular weight (Mw) to the numberaverage molecular weight (Mn), Mw/Mn) is not particularly limited and is preferably 1.01 to 5.0, more preferably 1.05 to 3.5. In the present description, the Mw and the Mn are standard polystyrene equivalent values determined using gel permeation chromatography (GPC), unless otherwise noted.

The melt flow rate (MFR) of the (meth)acrylic resin (A) is preferably 0.1 to 20 g/10 minutes, more preferably 0.5 to 15 g/10 minutes, particularly preferably 1.0 to 10 g/10 minutes. In the present description, the MFR of the (meth)acrylic resin (A) is a value determined according to JIS K7210 using a melt indexer at a temperature of 230°C under a load of 3.8 kg, unless otherwise noted.

The flexural modulus of the (meth)acrylic resin (A) is not particularly limited and is preferably 3200 MPa or less, more preferably 3150 MPa or less, particularly preferably 3100 MPa or less, most preferably 3000 MPa or less. The flexural modulus can be determined according to JIS K7171.

The (meth)acrylic resin (A) is preferably one methacrylic resin alone or a mixture of a plurality of methacrylic resins. The methacrylic resin is a homopolymer or a copolymer containing methyl methacrylate (MMA). The content of the MMA units in the methacrylic resin is not particularly limited and is preferably 90 mass% or more, more preferably 93 mass% or more, further preferably 95 mass% or more, further preferably 98 mass% or more, particularly preferably 99 mass% or more, most preferably 100 mass%, for improving the heat resistance.

The methacrylic resin may contain structural units derived from one or more monomers other than MMA. Examples of the other monomers include vinyl monomers having only one polymerizable carbon-carbon double bond in one molecule. Specifically, examples thereof include alkyl methacrylate esters other than MMA such as ethyl methacrylate, cyclohexyl methacrylate, t-butyl methacrylate, isobornyl methacrylate, 8-tricyclo[5.2.1.0^{2,6}]decanyl methacrylate, and 4-t-butylcyclohexyl methacrylate; acrylic acid alkyl esters such as methyl acrylate, ethyl acrylate, propyl acrylate, butyl acrylate, and 2-ethylhexyl acrylate; aryl acrylate esters such as phenyl acrylate; acrylic acid cycloalkyl esters such as cyclohexyl acrylate and norbornenyl acrylate; (meth)acrylamides; and (meth)acrylonitriles.

The one or two or more (meth)acrylic resins (preferably methacrylic resins) constituting the (meth)acrylic resin (A) can be produced by a known polymerization method. Various properties (such as Tg, Mw, Mw/Mn, MFR, and flexural modulus) of the (meth)acrylic resin can be adjusted by adjusting the polymerization conditions such as the polymerization temperature, the polymerization time, the type and amount of a chain transfer agent, and the type and amount of a polymerization initiator. The (meth)acrylic resin (A) having desired properties may be obtained by combining a plurality of (meth)acrylic resins having different properties.

Examples of the polymerization method of the (meth)acrylic resins include a radical polymerization method and an anion polymerization method. In the radical polymerization method, polymerization techniques such as the suspension polymerization method, the bulk polymerization method, the solution polymerization method, and the emulsion polymerization method can be employed. Among them, the suspension polymerization method and the bulk polymerization method are preferable in view of the productivity and the resistance to thermal decomposition. In the anion polymerization method, polymerization techniques such as the bulk polymerization method and the solution polymerization method can be employed, and the (meth)acrylic resin (A) with a high rr percentage can be obtained by these polymerization techniques.

### <Rubber particles having a multilayered structure (RP)>

The (meth)acrylic resin (A) is excellent in gloss, transparency, surface hardness, but may be insufficient in impact resistance. The impact resistance of the (meth)acrylic resin-containing layer can be improved by adding rubber particles having a multilayered structure (RP) to the (meth)acrylic resin (A). For example, the impact resistance of an extruded resin plate for resin glazing can be improved. For example, cracks when thermoforming or handling an extruded resin film for decorative film serving as an alternative material for coating can be reduced.

There is a tendency that, as the concentration of rubber particles having a multilayered structure (RP) in the acrylic resin composition increases, the toughness relatively increases, but the surface hardness relatively decreases. In view of the balance between the surface hardness and the impact resistance, the content of the (meth)acrylic resin (A) is preferably 94 to 75 mass%, more preferably 92 to 80 mass%, particularly preferably 92 to 88 mass%, and the content of the rubber particles having a multilayered structure (RP) (C_{RP}) is preferably 6 to 25 mass%, more preferably 8 to 20 mass%, particularly preferably 8 to 12 mass%, in the acrylic resin composition.

The rubber particles having a multilayered structure (RP) are preferably acrylic rubber particles having a multilayered structure comprising one or more graft copolymer layers containing one or more acrylic acid alkyl ester copolymers. As such acrylic rubber particles having a multilayered structure, those disclosed in Japanese Unexamined Patent Application Publication No. 2004-352837 can be used. The acrylic rubber particles having a multilayered structure can preferably comprise a crosslinked polymer layer containing acrylic acid alkyl ester units having 6 to 12 carbon atoms. The number of layers of the rubber particles having a multilayered structure (RP) is not particularly limited and may be two, or three or more layers. Preferably, the rubber particles having a multilayered structure (RP) are core-shell multilayered particles of three or more layers including the innermost layer (RP-a), one or more intermediate layers (RP-b), and the outermost layer (RP-c).

The constituent polymer of the innermost layer (RP-a) contains MMA units and graftable or crosslinkable monomer units and can further contain one or more other monomer units, as required. The content of the MMA units in the constituent polymer of the innermost layer (RP-a) is preferably 80 to 99.99 mass%, more preferably 85 to 99 mass%, particularly preferably 90 to 98 mass%. The proportion of the innermost layer (RP-a) in the three or more layers of the multilayered particles (RP) is preferably 0 to 15 mass%, more preferably 7 to 13 mass%. The proportion of the innermost layer (RP-a) falling within such a range can enhance the heat resistance of the (meth)acrylic resin-containing layer.

The constituent polymer of the intermediate layers (RP-b) contains acrylic acid alkyl ester units having 6 to 12 carbon atoms and graftable or crosslinkable monomer units and can further contain one or more other monomer units, as required. The content of the acrylic acid alkyl ester units in the constituent polymer of the intermediate layers (RP-b) is preferably 70 to 99.8 mass%, more preferably 75 to 90 mass%, particularly preferably 78 to 86 mass%. The proportion of the intermediate layers (RP-b) in the three or more layers of the rubber particles having a multilayered structure (RP) is preferably 40 to 60 mass%, more preferably 45 to 55 mass%. The proportion of the intermediate layers (RP-b) falling within such a range can enhance the surface hardness of the (meth)acrylic resin-containing layer and make it difficult for the (meth)acrylic resin-containing layer to crack.

The constituent polymer of the outermost layer (RP-c) contains MMA units and can further contain one or more other monomer units, as required. The content of the MMA units in the constituent polymer of the outermost layer (RP-c) is preferably 80 to 100 mass%, more preferably 85 to 100 mass%, particularly preferably 90 to 100 mass%. The proportion of the outermost layer (RP-c) in the three or more layers of the multilayered particles (RP) is preferably 35 to 50 mass%, more preferably 37 to 45 mass%. The proportion of the outermost layer (RP-c) falling within such a range can enhance the surface hardness of the (meth)acrylic resin-containing layer and make it difficult for the (meth)acrylic resin-containing layer to crack.

The particle size of the rubber particles having a multilayered structure (RP) is not particularly limited and is preferably 0.05 to 0.3 µm, more preferably 0.08 to 0.25 µm, particularly preferably 0.08 to 0.13 µm. The particle size can be determined by known methods such as observation with an electron microscope and dynamic light scattering measurement. The measurement by observation with an electron microscope can be performed, for example, by selectively staining a specific layer of the rubber particles having a multilayered structure (RP) by electron staining, actually measuring the particle size of a plurality of particles using a transmission electron microscope (TEM) or a scanning electron microscope (SEM), and determining the average thereof. The dynamic light scattering method is a measurement method using a principle that the Brownian motion of the particle increases as the particle size increases.

The rubber particles having a multilayered structure (RP) can be used in latex or powder form containing the rubber particles having a multilayered structure (RP) and dispersing particles (D), in order to suppress the reduction in handleability due to agglutination of the rubber particles having a multilayered structure (RP) with each other and the reduction in impact resistance due to poor dispersion during melt kneading. As the dispersing particles (D), particles composed of a (co)polymer of one or more monomers mainly composed of MMA and having a particle size relatively smaller than that of the rubber particles having a multilayered structure (RP) can be used, for example.

The particle size of the dispersing particles (D) is preferably as small as possible for improving the dispersibility and is preferably 40 to 120 nm, more preferably 50 to 100 nm, in view of the manufacturing reproducibility by the emulsion polymerization method. The amount of the dispersing particles (D) to be added is preferably 10 to 50 mass%, more preferably 20 to 40 mass%, with respect to the total amount of the rubber particles having a multilayered structure (RP) and the dispersing particles (D), in view of the effect of improving the dispersibility.

### <Other polymers and additives>

The (meth)acrylic resin-containing layer can contain one or more polymers other than the (meth)acrylic resin and/or various additives, as required.

The other polymers are not particularly limited. Examples thereof include other thermoplastic resins such as polyolefins, e.g., polyethylene and polypropylene, polyamides, polyphenylene sulfide, polyether ether ketone, polyester, polysulfone, polyphenylene oxide, polyimides, polyetherimide, fluorocarbon polymers, and polyacetal; and silicone resins. The content of the other polymers in the (meth)acrylic resin-containing layer is preferably 10 mass% or less, more preferably 5 mass% or less, particularly preferably 2 mass% or less.

Examples of the additives include colorants, antioxidants, stabilizers, ultraviolet absorbers, lubricants, processing aids, antistatic agents, impact resistant aids, foaming agents, fillers, and matting agents.

In the case of adding such other polymers and/or additives to the (meth)acrylic resin-containing layer, the timing of addition may be at the time of polymerization of the (meth)acrylic resin, after the polymerization, or at the time of mixing the plurality of (meth)acrylic resins.

For protecting the polycarbonate-containing layer with poor weather resistance from ultraviolet light to enhance the weather resistance of the extruded resin laminate, it is preferable that the (meth)acrylic resin (A) with a rr percentage of 63% or more be free from ring structures in the main chain, and further an ultraviolet absorber be added to the (meth)acrylic resin-containing layer.

The methacrylic resin having a ring structure in the main chain used as a heat-resistant (meth)acrylic resin in Patent Literature 3 that is mentioned in [Background] easily absorbs ultraviolet light and is difficult to achieve good weather resistance even if an ultraviolet absorber is added thereto. In the present invention, the (meth)acrylic resin (A) with a rr percentage of 63% or more is used as a heat-resistant (meth)acrylic resin. The (meth)acrylic resin (A) with a rr percentage of 63% or more can have a high Tg even without having a ring structure in the main chain. Therefore, the weather resistance of the (meth)acrylic resin (A) is at the same level as that of general (meth)acrylic resins, and an extruded resin laminate having good weather resistance can be achieved by adding an ultraviolet absorber to the (meth)acrylic resin-containing layer.

The ultraviolet absorption performance of the (meth)acrylic resin-containing layer can be adjusted by adjusting the thickness of the (meth)acrylic resin-containing layer and the content of the ultraviolet absorber in the (meth)acrylic resin-containing layer.

A value of ta (µm) × C_{UV} (mass%) is preferably 0.20 or more in the extruded resin laminate of the present invention, wherein ta (µm) represents the thickness of the (meth)acrylic resin-containing layer and Cuv (mass%) represents the content of the ultraviolet absorber in the (meth)acrylic resin-containing layer, since an extruded resin laminate with good weather resistance in which the ultraviolet absorption performance of the (meth)acrylic resin-containing layer is sufficiently high, and the deterioration of the polycarbonate (PC) due to ultraviolet light is sufficiently suppressed is obtained. A value of ta (µm) × Cuv (mass%) is more preferably 0.40 or more, particularly preferably 1.0 or more.

For suppressing bleeding of the ultraviolet absorber during the extrusion molding process, contamination of the surfaces of the cooling rolls, and deterioration of the surface appearance of the extruded resin laminate, C_{UV} is preferably 3 mass% or less, more preferably 2 mass% or less, particularly preferably 1 mass% or less.

The ultraviolet absorber is a compound having an ability to absorb ultraviolet light. The ultraviolet absorber is a compound that is said to have a function of mainly converting light energy into heat energy. Examples of the ultraviolet absorber include benzophenones, benzotriazoles, triazines, benzoates, salicylates, cyanoacrylates, oxanilides, malonic acid esters, and formamidines. These can be used alone or in combination of two or more. Among them, benzotriazoles, triazines, and ultraviolet absorbers with a maximum value εₘₐₓ of the molar extinction coefficient at a wavelength of 380 to 450 nm of 1200 dm³·mol⁻¹ cm⁻¹ or less are preferable. Among these ultraviolet absorbers, benzotriazoles are preferably used, since the resin deterioration due to ultraviolet light is suppressed.

Preferable examples of the benzotriazoles include 2-(2H-benzotriazol-2-yl)-4-(1,1,3,3-tetramethylbutyl)phenol (product name: TINUVIN329, available from BASF SE), 2-(2H-benzotriazol-2-yl)-4,6-bis(1-methyl-1-phenylethyl)phenol (product name: TINUVIN234, available from BASF SE), 2,2'-methylenebis[6-(2H-benzotriazol-2-yl)-4-tert-octylphenol] (product name: LA-31, available from ADEKA CORPORATION), and 2-(5-octylthio-2H-benzotriazol-2-yl)-6-tert-butyl-4-methylphenol.

The ultraviolet absorbers with a maximum value εₘₐₓ of the molar extinction coefficient at a wavelength of 380 to 450 nm of 1200 dm³·mol⁻¹ cm⁻¹ or less can suppress the yellowness of the extruded resin laminate or secondary formed products thereof. Examples of such ultraviolet absorbers include 2-ethyl-2'-ethoxy-oxalanilide (product name: Sanduboa VSU, available from Clariant (Japan) K.K.).

When it is desired to efficiently absorb light at a short wavelength of 380 nm or less, ultraviolet absorbers of triazines are preferably used. Examples of such ultraviolet absorbers include 2,4,6-tris(2-hydroxy-4-hexyloxy-3-methylphenyl)-1,3,5-triazine (product name: LA-F70, available from ADEKA CORPORATION) and analogs thereof such as hydroxyphenyl triazine ultraviolet absorbers (product names: TINUVIN477, TINUVIN460, and TINUVIN479, available from BASF SE) and 2,4-diphenyl-6-(2-hydroxy-4-hexyloxyphenyl)-1,3,5-triazine.

### (Polycarbonate-containing layer)

The polycarbonate-containing layer comprises one or more polycarbonates (PCs). Such a polycarbonate (PC) is preferably obtained by copolymerization of one or more dihydric phenols and one or more carbonate precursors. Examples of the production method include interfacial polymerization in which an aqueous solution of a dihydric phenol and an organic solvent solution of a carbonate precursor are reacted at the interface, and transesterification in which a dihydric phenol and a carbonate precursor are reacted under high-temperature, reduced pressure, and solvent-free conditions.

Examples of the dihydric phenol include 2,2-bis(4-hydroxyphenyl)propane (commonly known as bisphenol A), 1,1-bis(4-hydroxyphenyl)ethane, 1,1-bis(4-hydroxyphenyl)cyclohexane, 2,2-bis(3-methyl-4-hydroxyphenyl)propane, 2,2-bis(3,5-dimethyl-4-hydroxyphenyl)propane, bis(4-hydroxyphenyl)sulfide, and bis(4-hydroxyphenyl)sulfone. Among them, bisphenol A is preferable. Examples of the carbonate precursor include carbonyl halides such as phosgene; carbonate esters such as diphenyl carbonate; and haloformates such as dihaloformate of a dihydric phenol.

The weight-average molecular weight (Mw) of the polycarbonate (PC) is not particularly limited and is preferably 10,000 to 100,000, more preferably 20,000 to 70,000. The Mw being 10,000 or more allows the polycarbonate-containing layer to be excellent in impact resistance and heat resistance, whereas the Mw being 100,000 or less allows the polycarbonate-containing layer to be excellent in formability.

A commercially available product may be used for the polycarbonate (PC). Examples thereof include "CALIBRE (registered trademark)" and "SD POLYCA (registered trademark)", which are available from Sumika Styron Polycarbonate Limited, "IUPILON/Novarex (registered trademark)" available from Mitsubishi Engineering-Plastics Corporation, "TARFLON (registered trademark)" available from Idemitsu Kosan Co., Ltd., and "Panlite (registered trademark)" available from Teijin Chemicals Ltd.

The polycarbonate-containing layer can contain one or more other polymers and/or various additives, as required. The same other polymers and various additives as described above for the (meth)acrylic resin-containing layer can be used. The content of the other polymers in the polycarbonate-containing layer is preferably 15 mass% or less, more preferably 10 mass% or less, particularly preferably 5 mass% or less. The content of the additives can be appropriately set, as long as the effects of the present invention are not impaired. Preferably, the content of antioxidants is 0.01 to 1 part by mass, the content of ultraviolet absorbers is 0.01 to 3 parts by mass, the content of light stabilizers is 0.01 to 3 parts by mass, the content of lubricants is 0.01 to 3 parts by mass, and the content of dyes or pigments is 0.01 to 3 parts by mass, with respect to 100 parts by mass of the polycarbonate (PC).

In the case of adding such other polymers and/or additives to the polycarbonate (PC), the timing of addition may be at the time of polymerization of the polycarbonate (PC) or after the polymerization.

The glass transition temperature of the polycarbonate (PC) (Tg (PC)) is preferably 120 to 160°C, more preferably 135 to 155°C, particularly preferably 140 to 150°C.

In view of the stability of hot melt molding, the MFR of the constituent resin of the polycarbonate-containing layer is preferably 1 to 30 g/10 minutes, more preferably 3 to 20 g/10 minutes, particularly preferably 5 to 10 g/10 minutes. In the present description, the MFR of the constituent resin of the polycarbonate-containing layer is a value determined using a melt indexer at a temperature of 300°C under a load of 1.2 kg, unless otherwise noted.

### (Total thickness of extruded resin laminate and thickness of (meth)acrylic resin-containing layer)

The total thickness (t) of the extruded resin laminate of the present invention can be appropriately designed according to the application.

In the application as a protection plate for displays such as flat panels, e.g., liquid crystal displays, touch panel displays, the extruded resin plate preferably has a total thickness (t) of 0.5 to 3.0 mm, more preferably 0.8 to 2.5 mm. Excessively small total thickness (t) may result in insufficient rigidity, whereas excessively large total thickness (t) may hinder the weight reduction of flat panels, e.g., liquid crystal displays, touch panel displays.

In the application as resin glazing used for transport machinery such as automobiles, the extruded resin plate preferably has a total thickness (t) of 3.0 to 8.0 mm, more preferably 4.0 to 6.0 mm. Excessively small total thickness (t) may result in insufficient rigidity, whereas excessively large total thickness (t) may hinder the weight reduction of transport machinery such as automobiles.

In the application as resin glazing used for window members of buildings (for construction), the extruded resin plate preferably has a total thickness (t) of 3.0 to 12.0 mm, more preferably 3.0 to 8.0 mm, particularly preferably 4.0 to 6.0 mm. Excessively small total thickness (t) may result in insufficient rigidity, whereas excessively large total thickness (t) may hinder the weight reduction of window members of buildings.

In the application as a decorative film serving as an alternative material for coating used for transport machinery such as automobiles, the extruded resin film preferably has a total thickness (t) of 0.1 to 0.5 mm, more preferably 0.2 to 0.4 mm. Either excessively small or large total thickness (t) may result in insufficient thermoforming workability such as cracks during thermoforming.

The thickness (ta) of the (meth)acrylic resin-containing layer is preferably 0.04 mm or more, more preferably 0.04 to 0.20 mm, particularly preferably 0.05 to 0.15 mm, most preferably 0.06 to 0.10 mm, in any of the aforementioned applications. Excessively small thickness ta may result in poor scratch resistance, whereas excessively large thickness ta may result in poor impact resistance.

In the application as a decorative film serving as an alternative material for coating used for transport machinery such as automobiles, the proportion of the thickness of the (meth)acrylic resin-containing layer (in the case where two (meth)acrylic resin-containing layers are provided, the total thickness of these layers) with respect to the total thickness (t) of the extruded resin laminate is preferably 50% or less in view of the impact resistance and others, more preferably 5 to 50% in view of the balance between impact resistance and scratch resistance.

### (In-plane retardation value (Re))

In general, stress occurs in extruded resin laminates during molding, which may cause molecules to be oriented and retardation to occur. The "retardation" is the phase difference between light in the direction of the molecular backbone and light in the direction perpendicular to the direction of the molecular backbone. In general, polymers can have any shape by heating and melting, but it is known that retardation occurs due to molecules being oriented by the stress generated in the process of heating and cooling. The orientation of molecules can be controlled by optimizing the extrusion molding conditions, whereby the in-plane retardation value (Re) of the extruded resin laminate can be optimized.

In the application as a protection plate for displays such as flat panels, e.g., liquid crystal displays, touch panel displays, and the like, the in-plane retardation value (Re) of the extruded resin laminate is preferably 50 to 210 nm, more preferably 80 to 200 nm.

In the present description, the "retardation" refers to the in-plane retardation, unless otherwise noted.

### (Laminated structure)

The extruded resin laminate of the present invention may have other resin layers, as long as the (meth)acrylic resin-containing layer is laminated on at least one side of the polycarbonate-containing layer. Examples of the laminated structure of the extruded resin laminate of the present invention include a two-layer structure of polycarbonate-containing layer/(meth)acrylic resin-containing layer; a three-layer structure of (meth)acrylic resin-containing layer/polycarbonate-containing layer/(meth)acrylic resin-containing layer; a three-layer structure of (meth)acrylic resin-containing layer/polycarbonate-containing layer/another resin layer; and a three-layer structure of another resin layer/(meth)acrylic resin-containing layer/polycarbonate-containing layer.

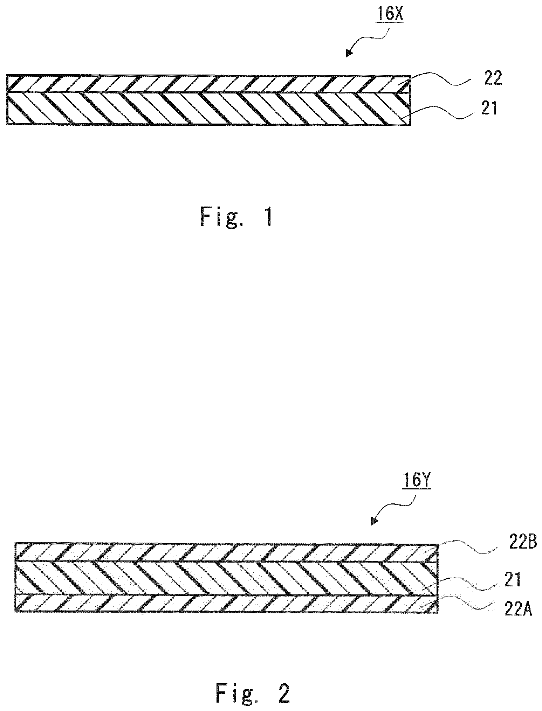

Fig. 1 and Fig. 2 are schematic cross-sectional views of the extruded resin laminates of the first and second embodiments according to the present invention. In the figures, reference numerals 16X and 16Y each denote an extruded resin laminate, reference numeral 21 denotes a polycarbonate-containing layer, and reference numerals 22, 22A, and 22B each denote a (meth)acrylic resin-containing layer. The extruded resin laminate 16X of the first embodiment has a two-layer structure of a polycarbonate-containing layer 21 and a (meth)acrylic resin-containing layer 22. The extruded resin laminate 16Y of the second embodiment has a three-layer structure of a first (meth)acrylic resin-containing layer 22A, the polycarbonate-containing layer 21, and a second (meth)acrylic resin-containing layer 22B. The design of the configuration of the extruded resin laminate can be appropriately changed.

The extruded resin laminate of the present invention may be provided with a cured coating film on at least one side thereof. Providing the cured coating film can impart functions such as scratch resistance and low reflectivity. The cured coating film can be formed by a known method (refer to Japanese Unexamined Patent Application Publication No. 2004-299199, Japanese Unexamined Patent Application Publication No. 2006-103169).

The thickness of the scratch-resistant (hard coating) cured coating film is preferably 2 to 30 µm, more preferably 5 to 20 µm. Excessively small thickness may result in insufficient surface hardness, whereas excessively large thickness may result in cracks caused by bending during the production process.

The thickness of the low-reflective cured coating film is preferably 80 to 200 nm, more preferably 100 to 150 nm. This is because either excessively small or large total thickness may result in insufficient low-reflection performance.

A specific method for forming the cured coating film will be described later.

### [Method for producing extruded resin laminate]

Hereinafter, a preferable aspect of the method for producing the extruded resin laminate of the present invention with the aforementioned configuration will be described. The extruded resin laminate of the present invention can be produced by a known method and is preferably produced by a production method including coextrusion.

### (Step (X))

The constituent resins of the polycarbonate-containing layer and the (meth)acrylic resin-containing layer are each heated and melted to be co-extruded in a molten state from a T die with a wide outlet in the form of a thermoplastic resin laminate in which the (meth)acrylic resin-containing layer is laminated on at least one side of the polycarbonate-containing layer.

The molten resins for polycarbonate-containing layer and for (meth)acrylic resin-containing layer are preferably melted and filtered with a filter before lamination. Multilayer formation using the molten resins that have been melted and filtered allows an extruded resin laminate with less defects due to foreign matter and gel to be obtained. A filter medium is appropriately selected for the filter depending on the operating temperature, the viscosity, the filtration accuracy. Examples thereof include non-woven fabrics composed of glass fibers; sheet-like materials made of phenolic resinimpregnated cellulose; metal fiber non-woven fabric sintered sheet-like materials; metal powder sintered sheet-like materials; wire screens; and combination of these. Among them, a filter in which a plurality of metal fiber non-woven fabric sintered sheet-like materials are laminated is preferable in view of the heat resistance and the durability. The filtration accuracy of the filter is not particularly limited and is preferably 30 µm or less, more preferably 15 µm or less, particularly preferably 5 µm or less.

Examples of the lamination method include the feed block method in which lamination is carried out before flowing into the T die and the multi-manifold method in which lamination is carried out inside the T die. For enhancing the smoothness at the interface between the layers of the extruded resin laminate, the multi-manifold method is preferable.

The molten thermoplastic resin laminate co-extruded from the T die is cooled using a plurality of cooling rolls. Preferably, using three or more cooling rolls adjacent to one another, the molten thermoplastic resin laminate is sandwiched between the n-th (however, n ≥ 1) cooling roll and the n+1-th cooling roll, and the operation of winding around the n+1-th cooling roll is repeated multiple times from n = 1 for cooling. For example, in the case of using three cooling rolls, the number of repetitions is two.

Examples of such a cooling roll include a metal roll and an elastic roll comprising a metal thin film in the outer peripheral portion (which may be hereinafter referred to also as a metal elastic roll). Examples of the metal roll include a drilled roll and a spiral roll. The surface of the metal roll may be a mirror surface or may have a pattern, unevenness. The metal elastic roll consists of, for example, a core roll made of stainless steel, a metal thin film made of stainless steel that covers the outer peripheral surface of this core roll, and a fluid sealed between these core roll and metal thin film, and it can show elasticity by the presence of the fluid. The thickness of the metal thin film is preferably about 2 to 5 mm. The metal thin film preferably has bending properties, flexibility, and preferably has a seamless structure having no welded joint. The metal elastic roll comprising such a metal thin film is easy to use because it is excellent in durability, can be handled like a usual mirror surface roll if the metal thin film is mirror finished, and if a pattern, an unevenness, is imparted on the metal thin film, it can become a roll capable of transferring the shape.

The extruded resin laminate obtained after cooling is wound up by winding rolls. The coextrusion, cooling, and winding steps described above are continuously carried out. As used herein, although the laminate in the heated and molten state is principally represented as the "thermoplastic resin laminate" and the laminate in a solid form is represented as the "extruded resin laminate", there is no definite boundary between the two.

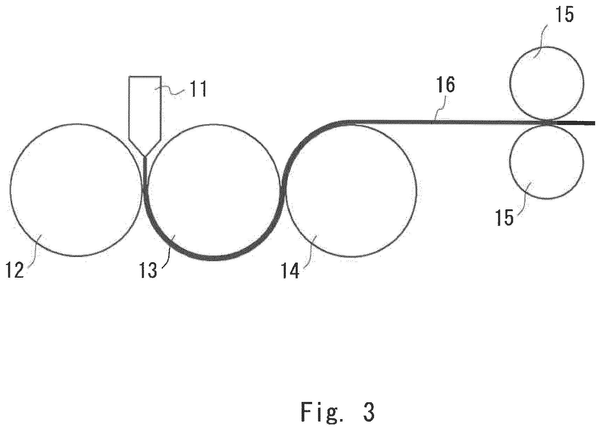

Fig. 3 shows a schematic view of an apparatus for production comprising a T die 11, first to third cooling rolls 12 to 14, and a pair of winding rolls 15, as one embodiment. The thermoplastic resin laminate co-extruded from the T die 11 is cooled using the first to third cooling rolls 12 to 14 and wound up by the pair of winding rolls 15. In the example illustrated, the third cooling roll 14 is "the cooling roll around which the thermoplastic resin laminate is finally wound up (hereinafter also simply referred to as the final cooling roll)".

The fourth and subsequent cooling rolls may be provided adjacent to the subsequent stage of the third cooling roll 14. In this case, the cooling roll around which the thermoplastic resin laminate is finally wound up serves as the "final cooling roll". A carrying roll can be provided between the plurality of cooling rolls adjacent to one another and the winding rolls, as required, but the carrying roll is not included in the "cooling rolls".

The design of the configuration of the apparatus for production can be appropriately changed.

The overall temperature of the thermoplastic resin laminate (TT) at the position where the thermoplastic resin laminate separates from the final cooling roll (the third cooling roll in the example shown in Fig. 3) is not particularly limited and is preferably -2°C or more, more preferably -2°C to +20°C, particularly preferably +0.1°C to +20°C, most preferably +0.1°C to +15°C, with respect to the glass transition temperature of the polycarbonate-containing layer (Tg (PC)).

Excessively low TT with respect to the Tg (PC) may result in large warpage due to the shape of the final cooling roll (the third cooling roll in the example shown in Fig. 3) being transferred to the extruded resin laminate. Meanwhile, excessively high TT with respect to the glass transition temperature of the resin layer in contact with the final cooling roll (the third cooling roll in the example shown in Fig. 3) may reduce the surface properties of the extruded resin laminate. The TT is measured according to the method described in [Examples] below. The TT is preferably 150 to 170°C.

### (Step (Y))

If necessary, a cured coating film having functions such as scratch resistance and low reflectivity can be formed on at least one side of the extruded resin laminate obtained after step (X) by a known method.

A cured coating film can be formed by applying a curable composition containing a thermosetting compound or an active energy ray curable compound, preferably in liquid form, onto the surface of the extruded resin laminate and curing the coating film by heating or irradiation with active energy ray. The active energy ray curable compound is a compound having a property of being cured by irradiation with an active energy ray such as an electron beam and ultraviolet light. Examples of the thermosetting composition include a polyorganosiloxane type and a crosslinked acrylic type. Examples of the active energy ray curable composition include those containing a curable compound such as monofunctional or polyfunctional acrylate monomers or oligomers and a photopolymerization initiator. The cured coating film can be formed using a commercially available hard coating agent.

The extruded resin laminate with cured coating film having scratch resistance and/or low reflectivity is suitable as a protection plate and the like for displays such as flat panels, e.g., liquid crystal displays and touch panel displays.

The extruded resin laminate with cured coating film having scratch resistance is suitable as a decorative film serving as an alternative material for coating used for transport machinery such as automobiles.

### (Thermoforming)

If necessary, shape processing such as curved surface processing can be performed by thermoforming the extruded resin laminate obtained after step (X) or the extruded resin laminate with cured coating film obtained after step (Y). The thermoforming can be performed by a known method such as press molding, vacuum forming, and pressure forming.

### [Applications]

The extruded resin laminate of the present invention can be used for various applications.

The extruded resin laminate of the present invention is, for example, suitable as a display protection plate for flat panel displays such as liquid crystal displays, touch panels. For example, it is suitable as a protection plate for flat panel displays such as liquid crystal displays and touch panels used in ATMs of financial institutions such as banks; vending machines; and digital information devices such as mobile phones (including smartphones), personal digital assistants (PDA) such as tablet-type personal computers, digital audio players, portable game machines, copiers, fax machines, and car navigation systems.

The extruded resin laminate of the present invention is, for example, suitable as resin glazing used for transport machinery such as automobiles, window members of buildings. For example, it is suitable as automobile glazing such as automobile sunroofs.

The extruded resin laminate of the present invention is, for example, suitable as a decorative film serving as an alternative material for coating used for transport machinery such as automobiles.

The extruded resin laminate of the present invention comprises a polycarbonate-containing layer that is excellent in heat resistance and impact resistance and a (meth)acrylic resin-containing layer that is excellent in gloss, transparency, and scratch resistance.

The extruded resin laminate of the present invention uses the (meth)acrylic resin (A) with a triad syndiotacticity (rr) of 63% or more as a (meth)acrylic resin contained in the (meth)acrylic resin-containing layer and therefore can have a higher glass transition temperature (Tg) of the (meth)acrylic resin (A) than that of general (meth)acrylic resins and reduce the difference in glass transition temperature (Tg) between the polycarbonate-containing layer and the (meth)acrylic resin-containing layer. Therefore, the present invention can provide an extruded resin laminate in which the heat resistance of the (meth)acrylic resin-containing layer is improved, warpage is reduced even under exposure to a high-temperature and high-humidity environment, and the thermoforming workability is excellent.

The (meth)acrylic resin (A) with a triad syndiotacticity (rr) of 63% or more can have a high Tg even without having a ring structure in the main chain. The (meth)acrylic resin (A) is preferably free from ring structures in the main chain. Further, the (meth)acrylic resin-containing layer preferably contains an ultraviolet absorber. Such an aspect can provide an extruded resin laminate having excellent weather resistance in addition to the aforementioned effects.

### Examples

Examples and Comparative Examples according to the present invention will be described.

### [Evaluation items and evaluation methods]

The evaluation items and the evaluation methods are as follows. (Weight-average molecular weight (Mw) and molecular weight distribution (weight-average molecular weight (Mw)/number-average molecular weight (Mn))

The Mw and the Mw/Mn of the resin were determined by the gel permeation chromatography (GPC) method. An HLC-8320 (product number) available from Tosoh Corporation equipped with a differential refractometer detector (RI detector) was used as a GPC apparatus. Tetrahydrofuran was used as an eluent, and two columns "TSKgel SuperMultipore HZM-M" and a column "SuperHZ4000" available from Tosoh Corporation connected in series were used as columns. 4 mg of the resin was dissolved in 5 ml of tetrahydrofuran to prepare a sample solution. The temperature of a column oven was set to 40°C, and 20 µl of the sample solution was injected thereto at the rate of 0.35 ml/min as an eluent flow to determine a chromatogram. Ten standard polystyrenes having a molecular weight within a range of 400 to 5000000 were determined by GPC, and a calibration curve showing the relation between the retention time and the molecular weight was prepared. The Mw and the Mw/Mn of the resin were determined based on this calibration curve. The base line of the chromatogram was a line connecting the point at which the slope of the peak on the high molecular weight side in the GPC chart changes from zero to positive, as viewed from the earliest retention time, and the point at which the slope of the peak on the low molecular weight side changes from negative to zero, as viewed from the earliest retention time. In the case where the chromatogram had a plurality of peaks, a line connecting the point at which the slope of the peak on the highest molecular weight side changes from zero to positive and the point at which the slope of the peak on the lowest molecular weight side changes from negative to zero was taken as the base line.

### (Triad syndiotacticity (rr) (rr percentage))

The (meth)acrylic resin was dissolved in deuterated chloroform, to prepare a sample solution. For the sample solution obtained, the ¹H-NMR spectrum was determined under conditions of room temperature and a cumulative number of 64 times using a nuclear magnetic resonance apparatus (ULTRA SHIELD 400 PLUS, available from Bruker Corporation). From the spectrum, an area (A0) of the region of 0.6 to 0.95 ppm and an area (AY) of the region of 0.6 to 1.35 ppm, when TMS was taken as 0 ppm, were measured. Then, the triad syndiotacticity (rr) was calculated by formula: (A0/AY) × 100.

### (Glass transition temperature (Tg))

The glass transition temperature (Tg) of the resin (composition) was determined in accordance with JIS K7121.

The glass transition temperature of the resin (composition) was determined by putting 10 mg of the resin (composition) into an aluminum pan and using a differential scanning calorimeter ("DSC-50", available from Rigaku Corporation). After nitrogen substitution was carried out for 30 minutes or more, the temperature was temporarily raised from 25°C to 230°C at a rate of 20°C/min, retained for 10 minutes, and then cooled to 25°C under a 10 ml/min nitrogen flow (primary scanning). Then, the temperature was raised to 230°C at a rate of 10°C/min (secondary scanning), and the glass transition temperature was calculated from the DSC curve obtained in the secondary scanning by a middle point method. When a plurality of Tg data were obtained in the resin composition containing two or more resins, the value derived from the resin as the main component was adopted as the Tg data.

### (Content of rubber particles having a multilayered structure (RP))

The (meth)acrylic resin composition containing rubber particles having a multilayered structure (RP) was dried at about 80°C for a whole day and night (12 hours or more), and then about 0.7 g was precisely weighed (W1). Thereafter, small pieces were dissolved in 80 mL of acetone and allowed to stand at room temperature for about one day. The suspension obtained was put into a centrifuge tube, followed by centrifugation at 15000 rpm for 5 minutes using a centrifuge (tabletop, multi-frame centrifuge, 7780II), available from Kubota Corporation. The supernatant was removed by decantation, then 80 mL of acetone was newly added thereto, and the mixture was allowed to stand at room temperature for one hour. Further, the centrifugation and decantation were repeated 3 times by the same method under the same conditions as above. The suspension obtained after the aforementioned operation was transferred to a beaker and heated using a hot plate at 80°C, to remove acetone. The mass of the resin obtained was accurately weighed (W2). The content (mass%) of the rubber particles having a multilayered structure was calculated by the following formula. Content (mass%) of rubber particles having a multilayered structure = (W2/W1) × 100

### (Average particle size of rubber particles having a multilayered structure (RP))

After an ultrathin slice was cut out from the extruded resin laminate containing the rubber particles having a multilayered structure (RP) with a diamond knife, and the butyl acrylate moiety was selectively stained with phosphotungstic acid, an image was captured using a transmission electron detector of a scanning electron microscope (SEM) ("JSM-7600", available from JEOL Ltd.). Thirty rubber particles having a multilayered structure (RP) showing the entire particles were selected at random, and the diameter of the stained portion was measured for each particle, to determine the average as an average particle size.

### (Overall temperature of thermoplastic resin laminate (TT))

The overall temperature of the thermoplastic resin laminate (TT) at the position where the thermoplastic resin laminate separated from the final cooling roll (specifically, the third cooling roll) was determined using an infrared thermometer. The determination position was the central portion in the width direction of the thermoplastic resin laminate.

### (Roll dirt)

The surfaces of the cooling rolls used in the extrusion molding step were visually observed, and the presence or absence of roll dirt was evaluated according to the following criteria.
Good: No roll dirt observed.
Poor: Roll dirt observed.

### (Pencil hardness (scratch resistance))

Using a table mobile pencil scratching tester (type P) (available from Toyo Seiki Seisaku-sho, Ltd.), the pencil hardness was determined. The pencil lead was pressed and scratched against the surface of the (meth)acrylic resin-containing layer contained in the extruded resin laminate at an angle of 45° under a load of 750 g, and the presence or absence of scratches was checked. The hardness of the pencil lead was sequentially increased, and the hardness of the lead one grade softer than when scratches occurred was adopted as the data.

### (Falling ball test (impact resistance test))

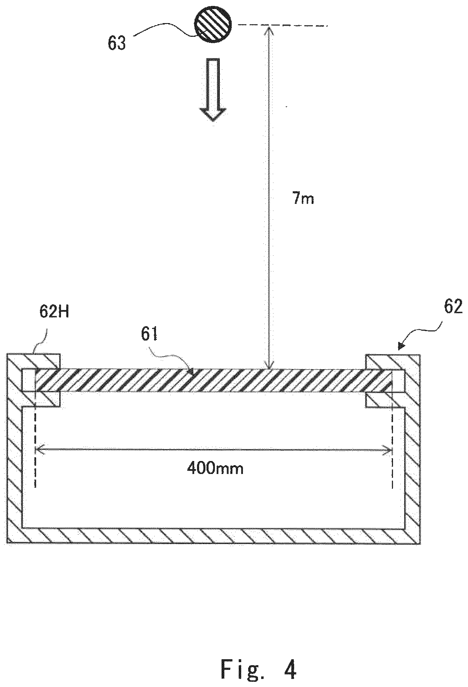

A test specimen of 400 mm × 400 mm was cut out from a plateshaped extruded resin laminate (extruded resin laminate for resin glazing) with a total thickness of 3.0 to 8.0 mm. As shown in Fig. 4, a box-shaped sample holder 62 having holding portions 62H that hold peripheral edges (regions of 10 mm from the side edges) of the test specimen 61 at the top with its upper surface open was prepared. The test specimen 61 was attached to this sample holder 62. The height from the inner bottom of the sample holder 62 to the lower surface of the test specimen 61 was 100 mm.

To the upper surface of the test specimen 61 attached to the sample holder 62 as described above, a 250-g steel ball 63 was allowed to naturally fall vertically from a position where the height from the surface of the test specimen 61 to the center of the steel ball 63 was 7 m. After the ball fell, the appearance of the test specimen 61 was visually observed, and the presence or absence of cracks or breaks was checked. This test was conducted for five test specimens, and the evaluation was carried out based on the following criteria.
Good: No cracks or breaks were observed in all the test specimens after the ball fell.
Poor: Cracks and/or breaks were observed in two or more test specimens after the ball fell.

### (Amount of change in warpage under exposure to high-temperature and high-humidity environment)

A rectangular test specimen with a short side of 65 mm and a long side of 110 mm was cut out from the extruded resin laminate. The short side direction was parallel to the extrusion direction, and the long side direction was perpendicular to the extrusion direction (the width direction). The test specimen obtained was placed on a glass surface plate so that the upper surface in extrusion molding was the uppermost surface and allowed to stand for 24 hours in an environment of a temperature of 23°C and a relative humidity of 50%. Then, the maximum value of the gap between the test specimen and the surface plate was measured using a feeler gauge, and this value was used as the initial amount of warpage. Then, the test specimen was placed on a glass surface plate in the environment tester so that the upper surface in extrusion molding was the uppermost surface and allowed to stand for 72 hours in an environment of a temperature of 85°C and a relative humidity of 85% and then for 24 hours in an environment of a temperature of 23°C and a relative humidity of 50%. Thereafter, the amount of warpage was measured in the same manner as in the initial stage, and the amount of change in warpage from the initial stage was determined. The evaluation was carried out according to the following criteria.
Good: The amount of change in warpage from the initial stage was 0.5 mm or less.
Poor: The amount of change in warpage from the initial stage was over 0.5 mm.

### (Weather resistance)

A test specimen of 50 mm × 50 mm was cut out from the extruded resin laminate. Using "SHIMADZU ultraviolet/visible/near-infrared spectrophotometer UV-3600", available from SHIMADZU CORPORATION, the absorption spectrum was determined, and the color coordinates of the L*a*b* color space defined by JIS Z 8781-4 (L* value, a* value, and b* value) were determined, as the initial color tone.

Then, the test specimen was set in an accelerated exposure tester ("EYE SUPER UV TESTER SUV-W161", available from IWASAKI ELECTRIC CO., LTD.) so that the (meth)acrylic resin-containing layer was on the light source side. The weather resistance test for 500 hours was conducted under the conditions of an irradiation wavelength of 295 to 450 nm, an irradiation intensity of 407 W/m², a temperature of 60°C, and a relative humidity of 50%. After the completion of the test, the surface of the test specimen was rubbed lightly and washed using a urethane sponge containing a neutral detergent. Then, the absorption spectrum was determined in the same manner as in the initial stage, and the color coordinates of the L*a*b* color space defined by JIS Z 8781-4 (L* value, a* value, and b* value) were determined as the color tones after the weather resistance test. The color difference, ΔE value, before and after the weather resistance test was determined. A smaller ΔE value indicates a smaller change in color of the extruded resin laminate after the weather resistance test and is preferable. The evaluation was carried out based on the following criteria.
Good: ΔE ≤ 5.0.
Poor: ΔE > 5.0.

### (In-plane retardation value (Re))

Using a running saw, a test specimen of 100 mm square was cut out from the extruded resin laminate and allowed to stand in an environment of 23°C ± 3°C for 10 minutes or more, and then the Re value was determined using "WPA-100 (-L)" available from Photonic Lattice, Inc. The determination position was the center of the test specimen.

### (Evaluation of press thermoforming)

Using a running saw, a rectangular test specimen with a short side of 100 mm and a long side of 200 mm was cut out from the extruded resin laminate. This test specimen was heated for 15 minutes in an oven controlled at a constant temperature within the range of 135°C ± 3°C (preheating). Then, the test specimen preheated was sandwiched between a pair of upper and lower molds for curved surface processing controlled at the same temperature as the oven, followed by hot pressing for 10 minutes (thermoforming). One of the pair of upper and lower molds had a concave curved surface with a radius of curvature of 50 mm in a cross-sectional view, and the other thereof had a convex curved surface with a radius of curvature 50 mm facing this concave curved surface. The test specimen was set so that the concave curved surface, the test specimen, and the convex curved surface were in close contact with one another. The test specimen was taken out of the pair of upper and lower molds after the completion of thermoforming and evaluated based on the following criteria.
<Formability>
   Good: The radius of curvature of the test specimen after thermoforming was 50% or more with respect to the radius of curvature of the molds.
   Poor: The radius of curvature of the test specimen after thermoforming was less than 50%.
<Surface properties>
   Good: The surface state of the test specimen after thermoforming did not change from that before thermoforming and was good.
   Poor: The surface state of the test specimen after thermoforming was worse than that before thermoforming, and surface roughness was observed.

### (Evaluation of vacuum forming)

Using a vacuum pressure forming machine (NGF type, available from Fu-se Vacuum Forming Ltd.), a film-shaped extruded resin laminate (extruded resin laminate for decorative film) (300 mm × 210 mm) having a total thickness of 0.1 to 0.5 mm was vacuum-formed. The extruded resin laminate was set in the forming machine, and the ends of the extruded resin laminate were fixed with tape. Thereafter, vacuum forming was conducted on a rectangular parallelepiped mold of 200 mm × 140 mm × height 15 mm when the surface temperature of the extruded resin laminate reached 170°C ± 3°C. Five extruded resin laminates were subjected to this vacuum forming and evaluated as follows.

### <Formability>

The corners of the rectangular parallelepiped of the five extruded resin laminates after vacuum forming were visually observed, and the formability was evaluated based on the following criteria.
Good: The shapes of the corners and the flat portion were good in all the extruded resin laminates.
Poor: The shapes were not perfect with the corners rounded, or a part of the flat portion was not in close contact with the mold in two or more extruded resin laminates.

### <Surface properties>

Five extruded resin laminates after vacuum forming were visually observed from the surface side opposite to the surface in contact with the mold, and the surface state was evaluated based on the following criteria.
Good: As compared with the extruded resin laminates before vacuum forming, no change was observed in the surface state of all the extruded resin laminates.
Poor: As compared with the extruded resin laminates before vacuum forming, the surface roughness increased or defects such as air bubbles were observed in two or more extruded resin laminates.

### <Handleability>

When the extruded resin laminate after vacuum forming was separated away from the mold of the vacuum pressure forming machine, the handleability was evaluated based on the following criteria.
Good: No cracks or tears occurred in all the extruded resin laminate.
Poor: Cracks or tears occurred in two or more extruded resin laminates.

### [Materials]

### <(Meth)acrylic resin>

### (MA1)

Polymethyl methacrylate (PMMA), "PARAPET (registered trademark) HR" available from KURARAY CO., LTD. (MFR at a temperature of 230°C under a load of 3.8 kg = 2.0 g/10 minutes and Tg = 115°C).

### (MA2)

In accordance with the method described in Preparation Example 1 of Japanese Unexamined Patent Application Publication No. 2016-94550, a methacrylic resin (MA2) (polymethyl methacrylate, PMMA) with a Mw of 70000, Mw/Mn of 1.05, a rr percentage of 75%, a Tg of 130°C, and a content of methyl methacrylate (MMA) units of 100 mass% was obtained.

### (MA3)

In accordance with the method described in Preparation Example 2 of Japanese Unexamined Patent Application Publication No. 2016-94550, a methacrylic resin (MA3) (polymethyl methacrylate, PMMA) with a Mw of 101000, a Mw/Mn of 1.87, a rr percentage of 52%, a Tg of 120°C, and a content of MMA units of 100 mass% was obtained.

### (MA4)

20 parts by mass of the (meth)acrylic resin (MA2) and 80 parts by mass of the (meth)acrylic resin (MA3) were melt-kneaded, to obtain a (meth)acrylic resin (MA4) (polymethyl methacrylate, PMMA) with a rr percentage of 56% and a Tg of 122°C.

### (MA5)

50 parts by mass of the (meth)acrylic resin (MA2) and 50 parts by mass of the (meth)acrylic resin (MA3) were melt-kneaded, to obtain a (meth)acrylic resin (MA5) (polymethyl methacrylate, PMMA) with a rr percentage of 63% and a Tg of 125°C.

### (MA6)

In accordance with the method described in International Patent Publication No. WO 2010/013557, an SMA resin (S1) (a styrene-maleic anhydride-MMA copolymer, styrene unit/maleic anhydride unit/MMA unit (mass ratio) = 56/18/26, Mw = 150,000, and Tg = 138°C) was obtained. This SMA resin (S1) and the methacrylic resin (MA3) were mixed at a mass ratio of 70:30, to obtain a methacrylic resin (MA6). The Tg was 132°C.

### <Rubber particles having a multilayered structure (RP)>

### (RP1)

An innermost layer (RP-al), an intermediate layer (RP-b1), and an outermost layer (RP-c1) composed of a copolymer having the following composition were sequentially formed to produce a three-layered acrylic multilayered rubber particle (RP1). The particle diameter was 0.23 µm.

The innermost layer (RP-al): methyl methacrylate (MMA) units/methyl acrylate (MA) units/allyl methacrylate units as crosslinkable monomers (mass ratio) = 32.91/2.09/0.07,

The intermediate layer (RP-b1): butyl acrylate units/styrene units/allyl methacrylate units as crosslinkable monomers (mass ratio) = 37.00/8.00/0.90,

The outermost layer (RP-c1): methyl methacrylate (MMA) units/methyl acrylate (MA) units (mass ratio) = 18.80/1.20.

### <Dispersing particles (D)>

(D1) Methacrylic copolymer particles, methyl methacrylate (MMA) units/methyl acrylate units (mass ratio) = 90/10, particle diameter: 0.11 µm.

### <Powder containing rubber particles having a multilayered structure (RD1)>

A latex containing rubber particles having a multilayered structure (RP1) and a latex containing dispersing particles (D1) were mixed at a solid mass ratio of 67:33. The mixed latex obtained was frozen at -30°C for 4 hours. The frozen latex was charged into a hot water of 90°C in an amount twice the amount of the frozen latex and dissolved to give a slurry. Thereafter, it was retained at 90°C for 20 minutes to be dehydrated and dried at 80°C, to obtain a powder containing rubber particles having a multilayered structure (RD1).

### <Methacrylic resin-containing composition (MR)>

### (MR1)

The methacrylic resin (MA1) and the powder containing the rubber particles having a multilayered structure (RD1) were melt-kneaded at a mass ratio of 88:12, to obtain a methacrylic resin-containing composition (MR1) (Tg = 114°C).

### (MR2)

The methacrylic resin (MA5) and the powder containing the rubber particles having a multilayered structure (RD1) were melt-kneaded at a mass ratio of 88:12, to obtain a methacrylic resin-containing composition (MR2) (Tg = 124°C).

### (MR3)

The methacrylic resin (MA5) and the powder containing the rubber particles having a multilayered structure (RD1) were melt-kneaded at a mass ratio of 70:30, to obtain a methacrylic resin-containing composition (MR3) (Tg = 123°C).

### <Ultraviolet absorber-added methacrylic resin (composition)>

### (Methacrylic resin (MA1-1))

1.00 mass% of an ultraviolet absorber (UVA1) ("LA-31RG", available from ADEKA CORPORATION) was melt-kneaded with the methacrylic resin (MA1), to obtain a methacrylic resin (MA1-1) (Tg = 115°C).

### (Methacrylic resin (MA2-1))

1.00 mass% of the ultraviolet absorber (UVA1) was melt-kneaded with the methacrylic resin (MA2), to obtain a methacrylic resin (MA2-1) (Tg = 130°C).

### (Methacrylic resin (MA3-1))

1.00 mass% of the ultraviolet absorber (UVA1) was melt-kneaded with the methacrylic resin (MA3), to obtain a methacrylic resin (MA3-1) (Tg = 120°C).

### (Methacrylic resin (MA4-1))

1.00 mass% of the ultraviolet absorber (UVA1) was melt-kneaded with the methacrylic resin (MA4), to obtain a methacrylic resin (MA4-1) (Tg = 122°C).

### (Methacrylic resin (MA5-1))

1.00 mass% of the ultraviolet absorber (UVA1) was melt-kneaded with the methacrylic resin (MA5), to obtain a methacrylic resin (MA5-1) (Tg = 125°C).

### (Methacrylic resin (MA6-1))

1.00 mass% of the ultraviolet absorber (UVA1) was melt-kneaded with the methacrylic resin (MA6), to obtain a methacrylic resin (MA6-1) (Tg = 131°C).

### (MR2-1)

1.00 mass% of the ultraviolet absorber (UVA1) was melt-kneaded with the methacrylic resin-containing composition (MR2), to obtain a methacrylic resin-containing composition (MR2-1) (Tg = 124°C).

### (MR2-2)

0.10 mass% of the ultraviolet absorber (UVA1) was melt-kneaded with the methacrylic resin-containing composition (MR2), to obtain a methacrylic resin-containing composition (MR2-2) (Tg = 124°C).

### (MR2-3)

0.50 mass% of the ultraviolet absorber (UVA1) was melt-kneaded with the methacrylic resin-containing composition (MR2), to obtain a methacrylic resin-containing composition (MR2-3) (Tg = 124°C).

### (MR2-4)

3.00 mass% of the ultraviolet absorber (UVA1) was melt-kneaded with the methacrylic resin-containing composition (MR2), to obtain a methacrylic resin-containing composition (MR2-4) (Tg = 124°C).

### (MR2-5)

4.00 mass% of the ultraviolet absorber (UVA1) was melt-kneaded with the methacrylic resin-containing composition (MR2), to obtain a methacrylic resin-containing composition (MR2-5) (Tg = 124°C).

### (MR3-1)

1.00 mass% of the ultraviolet absorber (UVA1) was melt-kneaded with the methacrylic resin-containing composition (MR3), to obtain a methacrylic resin-containing composition (MR3-1) (Tg = 123°C).

### <Polycarbonate (PC)>

(PC1): "SD POLYCA (registered trademark) PCX", available from Sumika Styron Polycarbonate Limited (MFR at a temperature of 300°C under a load of 1.2 kg = 6.7 g/10 minutes and Tg = 150°C).

### [Example 1] (Production of extruded resin laminate)

An apparatus for production as shown in Fig. 3 was used to form an extruded resin laminate.

The methacrylic resin-containing resin composition (MR2-1) melted using a 65 mmφ single screw extruder (available from TOSHIBA MACHINE CO., LTD.) and the polycarbonate (PC1) melted using a 150 mmφ single screw extruder (available from TOSHIBA MACHINE CO., LTD.) were laminated through a multi-manifold type die, to co-extrude a molten thermoplastic resin laminate from the T die.

Then, the molten thermoplastic resin laminate was sandwiched between the first cooling roll and the second cooling roll adjacent to each other, wound around the second cooling roll, sandwiched between the second cooling roll and the third cooling roll, and wound around the third cooling roll for cooling. After cooling, the extruded resin laminate obtained was wound up by a pair of winding rolls.

The overall temperature of the thermoplastic resin laminate (TT) at the position where the thermoplastic resin laminate separated from the final cooling roll (the third cooling roll) was adjusted to 150°C by controlling the temperature of the second cooling roll and the third cooling roll. The peripheral velocity ratio (V4/V2) of the second cooling roll to each winding roll was adjusted to 0.99, and the peripheral velocity ratio (V3/V2) of the second cooling roll to the third cooling roll was adjusted to 1.00. The polycarbonate-containing layer was in contact with the third cooling roll.

As described above, a two-layered extruded resin laminate having a laminated structure of (meth)acrylic resin-containing layer (surface layer 1)/polycarbonate-containing layer (surface layer 2) was obtained. The extruded resin laminate had a thickness (ta) of the (meth)acrylic resin-containing layer of 0.04 mm and a total thickness (t) of 0.1 mm. Table 1 shows the main production conditions of the extruded resin laminate and the evaluation results of the extruded resin laminate obtained.

### [Examples 2 to 9 and Comparative Examples 1 and 2]

Two-layered extruded resin laminates each having a laminated structure of (meth)acrylic resin-containing layer (surface layer 1)/polycarbonate-containing layer (surface layer 2) were obtained in the same manner as in Example 1 except that the composition of the (meth)acrylic resin-containing layer, the thickness of each layer, and the production conditions were changed as shown in Table 1, Table 2, and Table 4. Table 1, Table 2, and Table 4 show the evaluation results of the extruded resin laminate obtained in each example. The conditions which are not listed in the tables are defined as the conditions common to Example 1 (the same applies to the other Examples and Comparative Examples).

### [Example 10]

An apparatus for production as shown in Fig. 3 was used to form an extruded resin laminate. The methacrylic resin (MA5-1) melted using a 65 mmφ single screw extruder, the polycarbonate-containing resin composition (PC1) melted using a 150 mmφ single screw extruder, and the methacrylic resin (MA5-1) melted using a 65 mmφ single screw extruder were laminated through a multi-manifold type die, a molten three-layered thermoplastic resin laminate was co-extruded from the T die and cooled using the first to third cooling rolls, and the extruded resin laminate obtained after cooling was wound up by a pair of winding rolls. The overall temperature of the thermoplastic resin laminate (TT) at the position where the thermoplastic resin laminate separated from the final cooling roll (the third cooling roll) was adjusted to 150°C by controlling the temperature of the second cooling roll and the third cooling roll. The peripheral velocity ratio (V4/V2) of the second cooling roll to each winding roll was adjusted to 0.99, and the peripheral velocity ratio (V3/V2) of the second cooling roll to the third cooling roll was adjusted to 1.00.

As described above, a three-layered extruded resin laminate having a laminated structure of first (meth)acrylic resin-containing layer (surface layer 1)/polycarbonate-containing layer (inner layer)/second (meth)acrylic resin-containing layer (surface layer 2) was obtained. The two (meth)acrylic resin-containing layers had the same composition and the same thickness. The extruded resin laminate had a thickness (ta) of each of the two (meth)acrylic resin-containing layers of 0.07 mm and a total thickness (t) of 1.0 mm. Table 2 shows the production conditions of the extruded resin laminate and the evaluation results of the extruded resin laminate obtained.

### [Examples 11 to 22 and Comparative Examples 3 to 5]

Three-layered extruded resin laminates each having a laminated structure of first (meth)acrylic resin-containing layer (surface layer 1)/polycarbonate-containing layer (inner layer)/second (meth)acrylic resin-containing layer (surface layer 2) were obtained in the same manner as in Example 10 except that the composition of the (meth)acrylic resin-containing layer, the thickness of each layer, and the production conditions were changed as shown in Table 2 to Table 4. Table 2 to Table 4 show the evaluation results of the extruded resin laminate obtained in each example. Example 8 is not according to the invention.

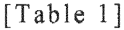

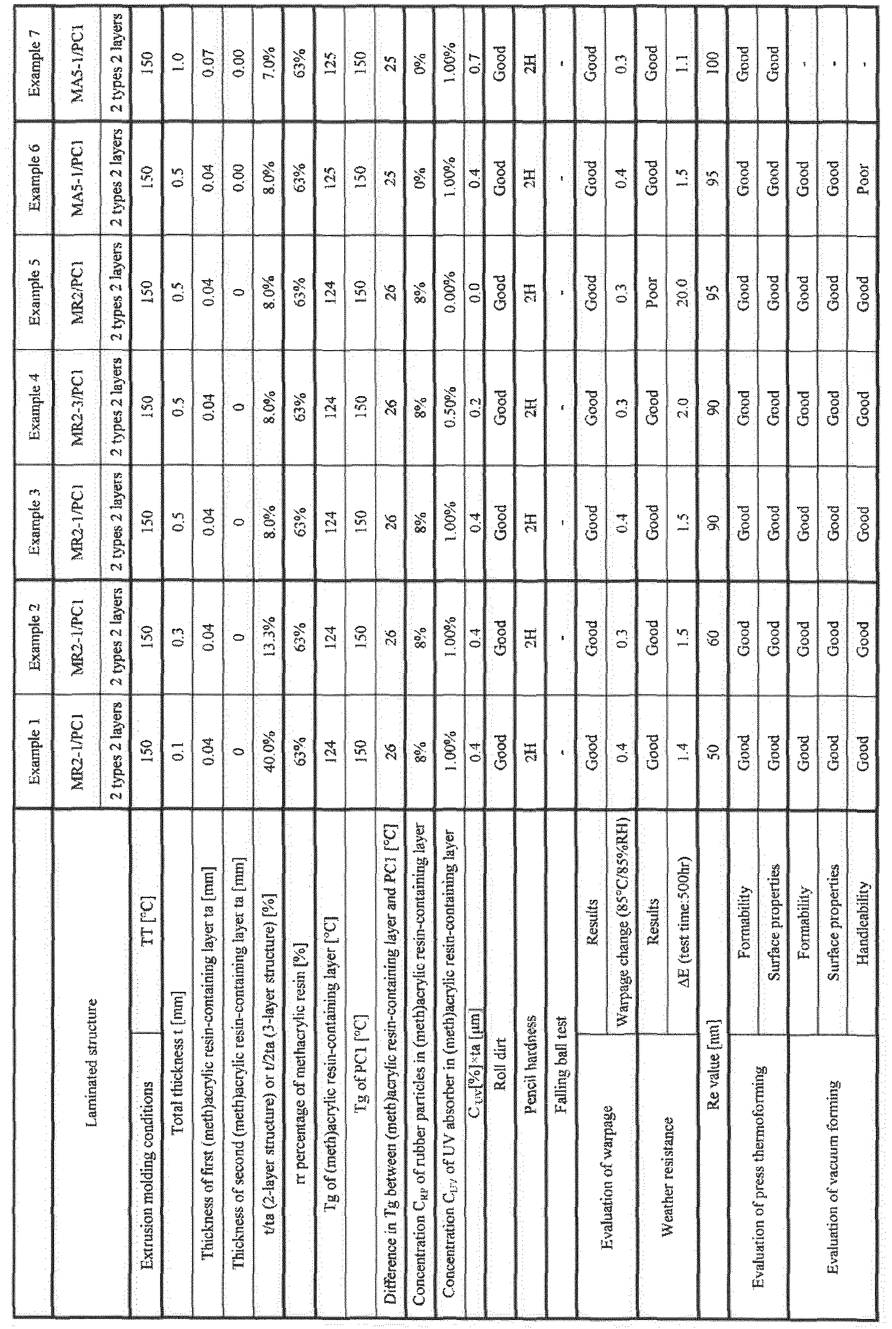

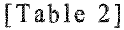

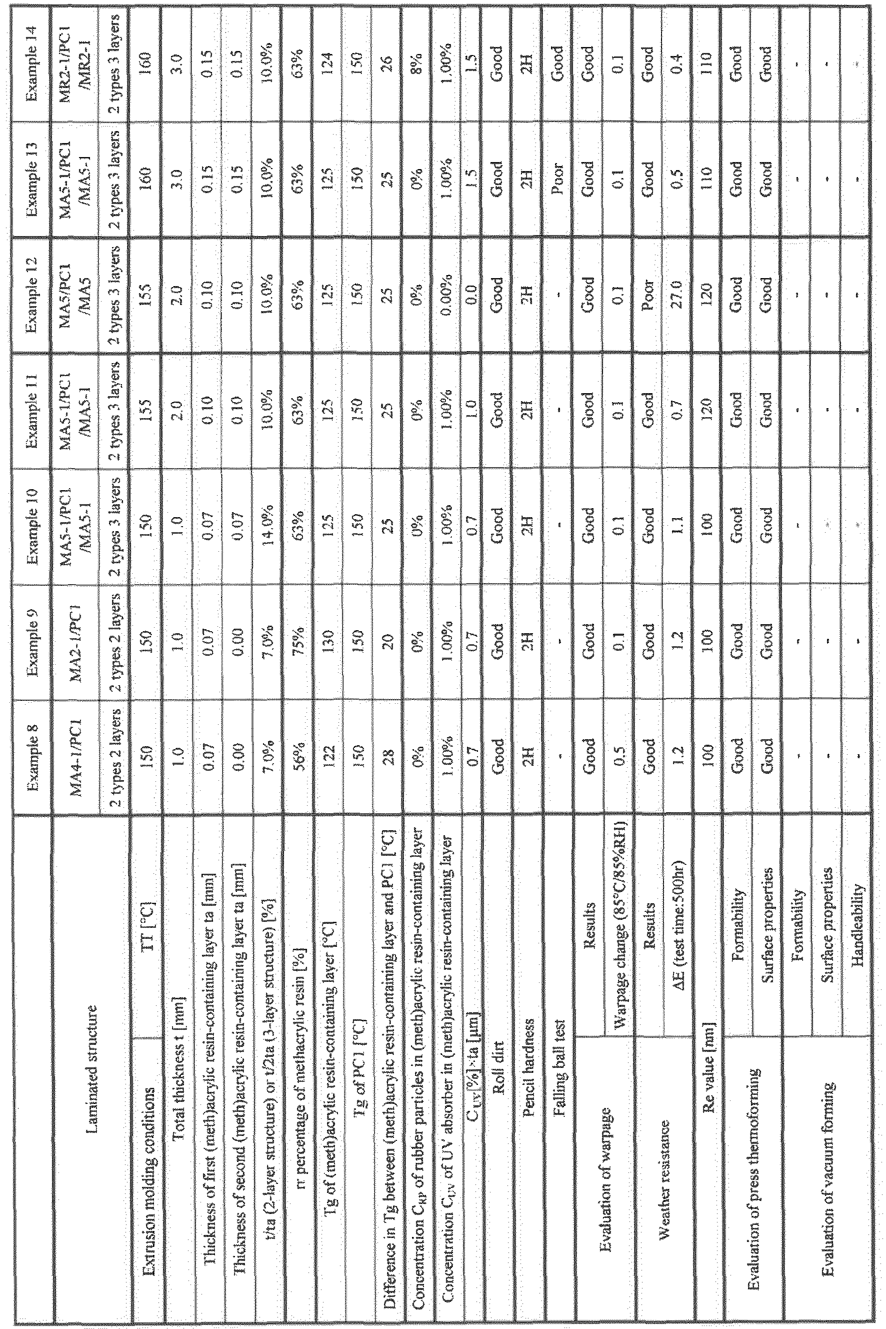

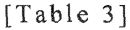

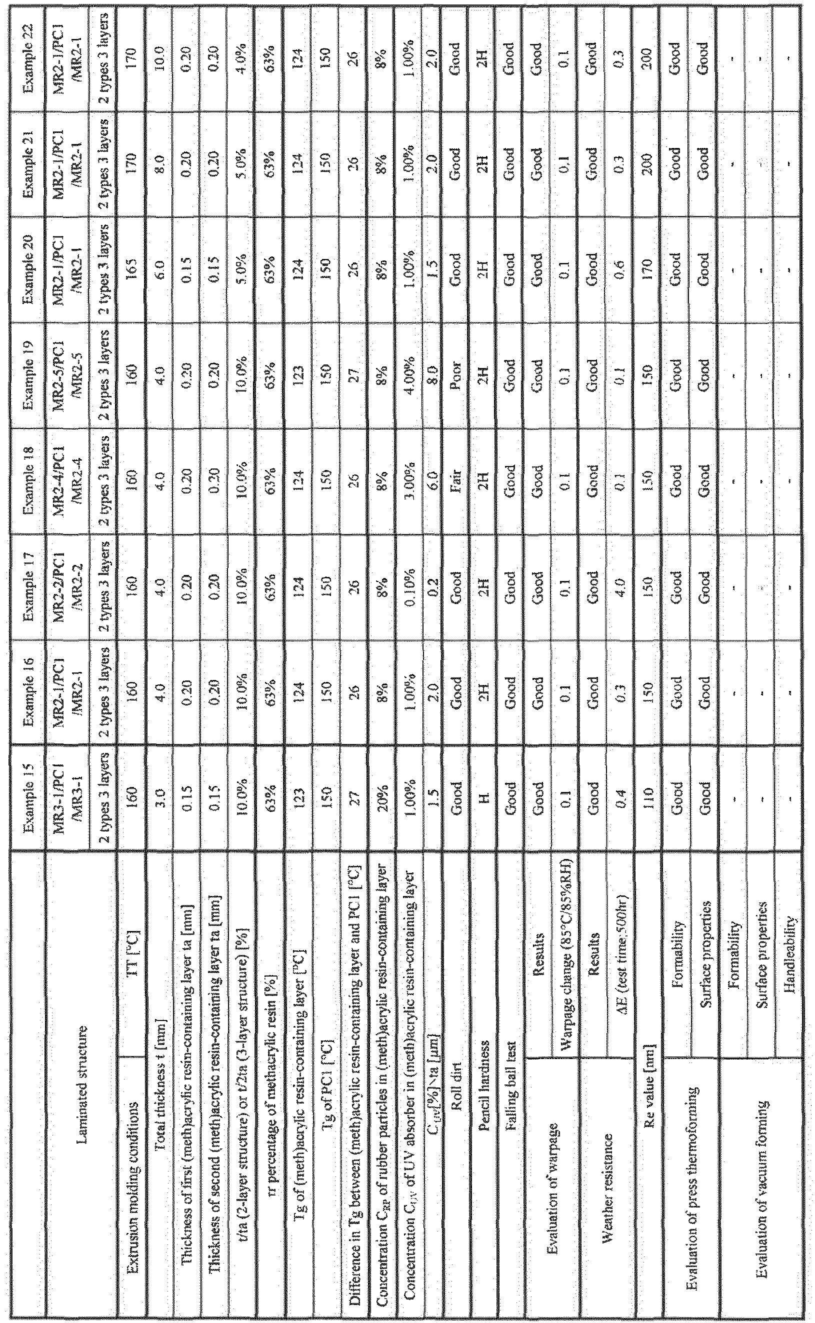

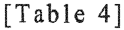

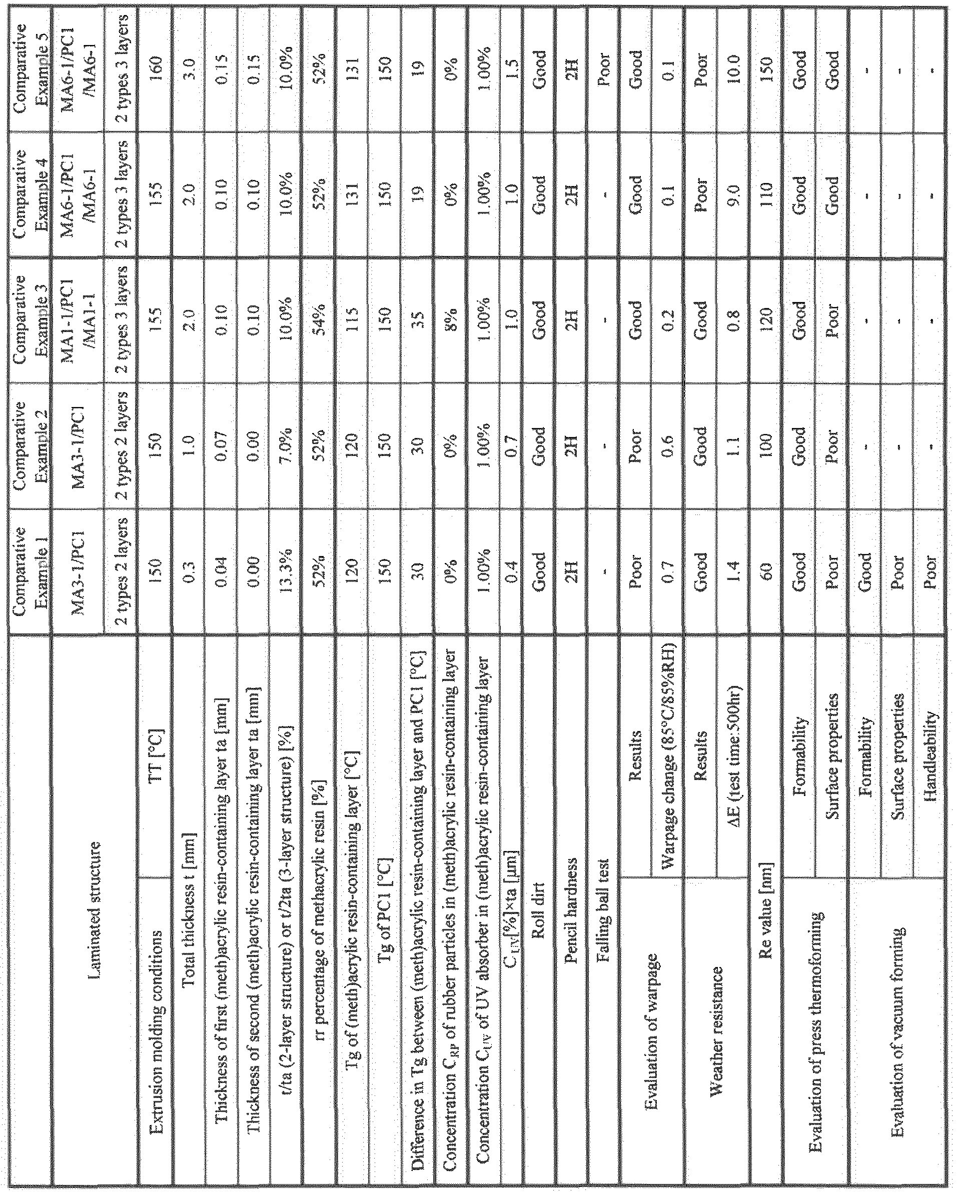

### [Summary of results]

In Examples 1 to 22, film-shaped or plate-shaped two-layered or three-layered extruded resin laminates in which a (meth)acrylic resin-containing layer containing the (meth)acrylic resin (A) with a triad syndiotacticity (rr) of 56% or more was laminated on one side or both sides of the polycarbonate-containing layer were produced.

In these examples, the Tg of the (meth)acrylic resin (A) was as high as 122°C or more, and the difference in Tg from the polycarbonate (PC1) was 28°C or less. Therefore, the extruded resin laminate obtained had high heat resistance of the (meth)acrylic resin-containing layer, reduced warpage even under exposure to a high-temperature and high-humidity environment, and good thermoforming workability.

In Examples 1 to 4, 6 to 11, and 13 to 22 in which the ultraviolet absorber was added to the (meth)acrylic resin-containing layer, extruded resin laminates with good weather resistance were obtained. However, when a large amount of the ultraviolet absorber was added, roll dirt occurred in some cases.

In Examples 1 to 5 in which the rubber particles having a multilayered structure were added to the (meth)acrylic resin-containing layer, the film-shaped extruded resin laminates obtained had high impact resistance and less cracks in handling during vacuum forming.

In Examples 14 to 22 in which the rubber particles having a multilayered structure were added to the (meth)acrylic resin-containing layer, the plate-shaped extruded resin laminates obtained had high impact resistance and good results in the falling ball test.

Each of the extruded resin laminates obtained in Examples 1 to 22 had a Re value within a range suitable as a display protection plate.

In Comparative Examples 1 to 3, film-shaped or plate-shaped two-layered or three-layered extruded resin laminates in which a (meth)acrylic resin-containing layer containing a (meth)acrylic resin for comparison with a triad syndiotacticity (rr) of less than 56% was laminated on one side or both sides of the polycarbonate-containing layer were produced.

In these comparative examples, the Tg of the (meth)acrylic resin was as low as less than 122°C, and the difference in Tg from the polycarbonate (PC1) contained in the polycarbonate-containing layer was over 28°C. Therefore, the extruded resin laminates obtained had no good heat resistance of the (meth)acrylic resin-containing layer, a large change in warpage when exposed to a high-temperature and high-humidity environment, and good thermoforming workability.

In Comparative Examples 4 and 5, the overall Tg of the (meth)acrylic resin-containing layer could be increased to 131°C by adding the SMA resin to the (meth)acrylic resin-containing layer, but the extruded resin laminates obtained had poor weather resistance even by adding the ultraviolet absorber to the (meth)acrylic resin-containing layer.

In Comparative Example 1 in which the rubber particles having a multilayered structure were not added to the (meth)acrylic resin-containing layer, the film-shaped extruded resin laminate obtained had low impact resistance, and cracks occurred in handling during vacuum forming.

In Comparative Example 5 in which the rubber particles having a multilayered structure were not added to the (meth)acrylic resin-containing layer, the plate-shaped extruded resin laminate obtained had low impact resistance, and the results in the falling ball test were poor.

### Reference Signs List

16, 16X, 16Y: Extruded resin laminate
21: Polycarbonate-containing layer
22, 22A, 22B: (Meth)acrylic resin-containing layer

## Claims

1. An extruded resin laminate comprising:
a (meth)acrylic resin-containing layer containing a (meth)acrylic resin (A) with a triad syndiotacticity (rr) of 63% or more, the (meth)acrylic resin-containing layer being laminated on at least one side of a polycarbonate-containing layer,
wherein the (meth)acrylate resin (A) has a content of methyl methacrylate units of 90 mass% or more, and
wherein the triad syndiotacticity (rr) is determined as indicated in the description.

2. The extruded resin laminate according to Claim 1, wherein a difference in glass transition temperature between the polycarbonate contained in the polycarbonate-containing layer and the (meth)acrylic resin (A) is 28°C or less, wherein the glass transition temperature is determined in accordance with JIS K7121.

3. The extruded resin laminate according to Claim 1 or 2, wherein the (meth)acrylic resin (A) has a glass transition temperature of 122°C or more.

4. The extruded resin laminate according to any one of Claims 1 to 3, wherein the (meth)acrylic resin (A) has a content of methyl methacrylate units of 99 mass% or more.

5. The extruded resin laminate according to any one of Claims 1 to 4, wherein the (meth)acrylic resin-containing layer comprises an ultraviolet absorber.

6. The extruded resin laminate according to any one of Claims 1 to 5, wherein
a Cuv is 3 mass% or less, and
a value of ta (µm) × C_{UV} (mass%) is 0.20 or more,
wherein ta (µm) represents a thickness of the (meth)acrylic resin-containing layer, and Cuv (mass%) represents a content of the ultraviolet absorber in the (meth)acrylic resin-containing layer.

7. The extruded resin laminate according to any one of Claims 1 to 6, wherein the (meth)acrylic resin-containing layer comprises rubber particles having a multilayered structure, and wherein the rubber particles having a multilayered structure are acrylic rubber particles having a multilayered structure comprising one or more graft copolymer layers containing one or more acrylic acid alkyl ester copolymers.

8. The extruded resin laminate according to Claim 7, wherein a content of the rubber particles having a multilayered structure in the (meth)acrylic resin-containing layer is 6 to 25 mass%.

9. The extruded resin laminate according to any one of Claims 1 to 8 to be used for a display protection plate, the extruded resin laminate having a total thickness of 0.5 to 3.0 mm and the (meth)acrylic resin-containing layer having a thickness of 0.04 mm or more.

10. The extruded resin laminate according to Claim 9, having a retardation within a range of 50 to 210 nm, wherein the retardation is determined as indicated in the description.

11. The extruded resin laminate according to any one of Claims 1 to 8 to be used for construction, the extruded resin laminate having a total thickness of 3.0 to 12.0 mm and the (meth)acrylic resin-containing layer having a thickness of 0.04 mm or more.

12. The extruded resin laminate according to any one of Claims 1 to 8 to be used for a decorative film, the extruded resin laminate having a total thickness of 0.1 to 0.5 mm and the (meth)acrylic resin-containing layer having a thickness of 0.04 mm or more, wherein a proportion of the thickness of the (meth)acrylic resin-containing layer with respect to the total thickness is 50% or less.

13. An extruded resin laminate with cured coating film, comprising:
the extruded resin laminate according to any one of Claims 1 to 12; and
a cured coating film,
wherein the cured coating film is a scratch-resistant cured coating film or a low-reflective cured coating film.

## Patentansprüche

1. Extrudiertes Harzlaminat, umfassend:
eine (Meth)acrylharz enthaltende Schicht, enthaltend ein (Meth)acrylharz (A) mit einer Triaden-Syndiotaktizität (rr) von 63% oder mehr, wobei die (Meth)acrylharz enthaltende Schicht auf mindestens eine Seite einer Polycarbonat enthaltenden Schicht laminiert ist,
wobei das (Meth)acrylharz (A) einen Gehalt an Methylmethacrylateinheiten von 90 Massen-% oder mehr aufweist, und
wobei die Triaden-Syndiotaktizität (rr) wie in der Beschreibung angegeben bestimmt wird.

2. Extrudiertes Harzlaminat nach Anspruch 1, wobei ein Unterschied in der Glasübergangstemperatur zwischen dem in der Polycarbonat enthaltenden Schicht enthaltenen Polycarbonat und dem (Meth)acrylharz (A) 28°C oder weniger beträgt, wobei die Glasübergangstemperatur in Übereinstimmung mit **JIS** K7121 bestimmt wird.

3. Extrudiertes Harzlaminat nach Anspruch 1 oder 2, wobei das (Meth)acrylharz (A) eine Glasübergangstemperatur von 122°C oder mehr aufweist.

4. Extrudiertes Harzlaminat nach einem der Ansprüche 1 bis 3, wobei das (Meth)acrylharz (A) einen Gehalt an Methylmethacrylateinheiten von 99 Massen-% oder mehr aufweist.

5. Extrudiertes Harzlaminat nach einem der Ansprüche 1 bis 4, wobei die (Meth)acrylharz enthaltende Schicht einen Ultraviolettabsorber umfasst.

6. Extrudiertes Harzlaminat nach einem der Ansprüche 1 bis 5, wobei
ein Cuv 3 Massen-% oder weniger beträgt und
ein Wert von ta (µm) × C_{UV} (Massen-%) 0,20 oder mehr beträgt,
wobei ta (µm) eine Dicke der (Meth)acrylharz enthaltenden Schicht darstellt und Cuv (Massen-%) einen Gehalt des Ultraviolettabsorbers in der (Meth)acrylharz enthaltenden Schicht darstellt.

7. Extrudiertes Harzlaminat nach einem der Ansprüche 1 bis 6, wobei die (Meth)acrylharz enthaltende Schicht Kautschukteilchen mit einer mehrschichtigen Struktur umfasst, und wobei die Kautschukteilchen mit einer mehrschichtigen Struktur Acrylkautschukteilchen mit einer mehrschichtigen Struktur sind, die eine oder mehrere Pfropfcopolymerschichten umfassen, die ein oder mehrere Acrylsäurealkylestercopolymere enthalten.

8. Extrudiertes Harzlaminat nach Anspruch 7, wobei ein Gehalt der Kautschukteilchen mit einer mehrschichtigen Struktur in der (Meth)acrylharz enthaltenden Schicht 6 bis 25 Massen-% beträgt.

9. Extrudiertes Harzlaminat nach einem der Ansprüche 1 bis 8 zur Verwendung für eine Displayschutzplatte, wobei das extrudierte Harzlaminat eine Gesamtdicke von 0,5 bis 3,0 mm und die (Meth)acrylharz enthaltende Schicht eine Dicke von 0,04 mm oder mehr aufweist.

10. Extrudiertes Harzlaminat nach Anspruch 9, aufweisend eine Retardierung innerhalb eines Bereichs von 50 bis 210 nm, wobei die Retardierung wie in der Beschreibung angegeben bestimmt wird.

11. Extrudiertes Harzlaminat nach einem der Ansprüche 1 bis 8 zur Verwendung für Bauzwecke, wobei das extrudierte Harzlaminat eine Gesamtdicke von 3,0 bis 12,0 mm und die (Meth)acrylharz enthaltende Schicht eine Dicke von 0,04 mm oder mehr aufweist.

12. Extrudiertes Harzlaminat nach einem der Ansprüche 1 bis 8 zur Verwendung für eine dekorative Folie, wobei das extrudierte Harzlaminat eine Gesamtdicke von 0,1 bis 0,5 mm und die (Meth)acrylharz enthaltende Schicht eine Dicke von 0,04 mm oder mehr aufweist, wobei ein Anteil der Dicke der (Meth)acrylharz enthaltenden Schicht in Bezug auf die Gesamtdicke 50% oder weniger beträgt.

13. Extrudiertes Harzlaminat mit einem gehärtetem Beschichtungsfilm, umfassend:
das extrudierte Harzlaminat nach einem der Ansprüche 1 bis 12; und
einen gehärteten Beschichtungsfilm,
wobei der gehärtete Beschichtungsfilm ein kratzfester gehärteter Beschichtungsfilm oder ein niedrigreflektierender gehärteter Beschichtungsfilm ist.

## Revendications

1. Stratifié de résine extrudée comprenant :
une couche contenant de la résine (méth)acrylique contenant une résine (méth)acrylique (A) avec une syndiotacticité de triades (rr) de 63 % ou plus, la couche contenant de la résine (méth)acrylique étant stratifiée sur au moins un côté d'une couche contenant du polycarbonate,
dans lequel la résine de (méth)acrylate (A) a une teneur en unités de méthacrylate de méthyle de 90 % en masse ou plus, et
dans lequel la syndiotacticité de triades (rr) est déterminée tel qu'indiqué dans la description.

2. Stratifié de résine extrudée selon la revendication 1, dans lequel une différence de température de transition vitreuse entre le polycarbonate contenu dans la couche contenant du polycarbonate et la résine (méth)acrylique (A) est de 28 °C ou moins,
dans lequel la température de transition vitreuse est déterminée conformément à JIS K7121.

3. Stratifié de résine extrudée selon la revendication 1 ou 2, dans lequel la résine (méth)acrylique (A) a une température de transition vitreuse de 122 °C ou plus.

4. Stratifié de résine extrudée selon l'une quelconque des revendications 1 à 3, dans lequel la résine (méth)acrylique (A) a une teneur en unités de méthacrylate de méthyle de 99 % en masse ou plus.

5. Stratifié de résine extrudée selon l'une quelconque des revendications 1 à 4, dans lequel la couche contenant de la résine (méth)acrylique comprend un absorbeur d'ultraviolet.

6. Stratifié de résine extrudée selon l'une quelconque des revendications 1 à 5, dans lequel
une C_{UV} est de 3 % en masse ou moins, et
une valeur de ta (µm) x C_{UV} (% en masse) es de 0,20 ou plus,
dans lequel ta (µm) représente une épaisseur de la couche contenant de la résine (méth)acrylique, et C_{UV} (% en masse) représente une teneur en l'absorbeur d'ultraviolet dans la couche contenant de la résine (méth)acrylique.

7. Stratifié de résine extrudée selon l'une quelconque des revendications 1 à 6, dans lequel la couche contenant de la résine (méth)acrylique comprend des particules de caoutchouc ayant une structure multicouche, et dans lequel les particules de caoutchouc ayant une structure multicouche sont des particules de caoutchouc acrylique ayant une structure multicouche comprenant une ou plusieurs couches de copolymère greffé contenant un ou plusieurs copolymères d'ester alkylique d'acide acrylique.

8. Stratifié de résine extrudée selon la revendication 7, dans lequel une teneur en les particules de caoutchouc ayant une structure multicouche dans la couche contenant de la résine (méth)acrylique est de 6 à 25 % en masse.

9. Stratifié de résine extrudée selon l'une quelconque des revendications 1 à 8 devant être utilisé dans une plaque de protection d'affichage, le stratifié de résine extrudée ayant une épaisseur totale de 0,5 à 3,0 mm et la couche contenant de la résine (méth)acrylique ayant une épaisseur de 0,04 mm ou plus.

10. Stratifié de résine extrudée selon la revendication 9, ayant une retardation au sein d'une plage de 50 à 210 nm, dans lequel la retardation est déterminée tel qu'indiqué dans la description.

11. Stratifié de résine extrudée selon l'une quelconque des revendications 1 à 8 devant être utilisé pour la construction, le stratifié de résine extrudée ayant une épaisseur totale de 3,0 à 12,0 mm et la couche contenant de la résine (méth)acrylique ayant une épaisseur de 0,04 mm ou plus.

12. Stratifié de résine extrudée selon l'une quelconque des revendications 1 à 8 devant être utilisé dans un film décoratif, le stratifié de résine extrudée ayant une épaisseur totale de 0,1 à 0,5 mm et la couche contenant de la résine (méth)acrylique ayant une épaisseur de 0,04 mm ou plus, dans lequel une proportion de l'épaisseur de la couche contenant de la résine (méth)acrylique par rapport à **l'épaisseur** totale est de 50 % ou moins.

13. Stratifié de résine extrudée avec film d'enrobage durci, comprenant :
le stratifié de résine extrudée selon l'une quelconque des revendications 1 à 12 ; et
un film d'enrobage durci,
dans lequel le film d'enrobage durci est un film d'enrobage durci résistant aux rayures ou un film d'enrobage durci faiblement réfléchissant.
